# EUROPÄISCHE PATENTSCHRIFT

(11) **EP 2 242 944 B1**
(45) Veröffentlichungstag und Bekanntmachung des Hinweises auf die Patenterteilung: **26.09.2012**
(21) Anmeldenummer: 09710610.8
(22) Anmeldetag: 13.02.2009
(51) Int. Cl.: F16K 31/122, F16K 27/02

(54) **HUBVENTIL, INSBESONDERE FÜR DIE PROZESSTECHNIK**
LIFT VALVE, PARTICULARLY FOR PROCESS TECHNOLOGY
SOUPAPE DE LEVAGE, NOTAMMENT POUR TECHNOLOGIE DES PROCÉDÉS

(30) Priorität: 16.02.2008 DE 102008009606; 22.04.2008 DE 102008020098
(43) Veröffentlichungstag der Anmeldung: 27.10.2010
(73) Patentinhaber: GEA Tuchenhagen GmbH, 21514 Büchen (DE)
(72) Erfinder: BURMESTER, Jens, 23883 Grambek (DE)
(74) Vertreter: Mönkemeyer, Philipp
(86) Internationale Anmeldenummer: PCT/EP2009/001019
(87) Internationale Veröffentlichungsnummer: WO 2009/100920

(56) Entgegenhaltungen:
- EP-A- 0 834 689
- DE-A1- 2 028 544
- DE-A1- 2 623 039
- DE-A1- 3 006 409
- DE-A1- 3 106 578

## Beschreibung

### TECHNISCHES GEBIET

Die Erfindung betrifft ein Hubventil, insbesondere für die Prozesstechnik, mit einem aus wenigstens einem Ventilgehäuseteil bestehenden Ventilgehäuse, mit wenigstens einem ersten und einem zweiten Anschlussstutzen, die an den Ventilgehäuseteil angeschlossen sind und eine Verbindung zu dessen Innenraum herstellen, mit einer im Ventilgehäuse zwischen den Anschlussstutzen angeordneten Verbindungsöffnung, in oder an der eine Sitzfläche ausgebildet ist, mit einem translatorisch verschieblichen einheitlichen Verschlussteil, der mit der Sitzfläche zusammenwirkt und die Verbindungsöffnung steuert, mit einer an dem Verschlussteil befestigten einzigen Betätigungsstange, die durch eine der Verbindungsöffnung gegenüberliegende Gehäuseöffnung des Ventilgehäuses aus diesem dichtend herausgeführt und mit einem Antriebskolben eines Stellantriebs verbunden ist, mit einem das Ventilgehäuse mit dem Stellantrieb verbindenden Latemengehäuse, mit dem Stellantrieb, der in einem Antriebsgehäuse den gegen die Kraft einer Antriebsfeder und bei Beaufschlagung mit einem Druckmittel verschieblichen Antriebskolben aufweist, und mit der Betätigungsstange, die wenigstens in ihrem Durchdringungsbereich mit dem Ventilgehäuse in der Weise in ihrem Querschnitt erweitert ist, dass sie dort in einer topfförmigen Ausnehmung einen verschlussteilseitigen Teil der Antriebsfeder aufnimmt.

### STAND DER TECHNIK

Das Hubventil der einleitend gekennzeichneten Gattung besitzt die notwendigen Merkmale eines Absperrventils, bei dem wenigstens eine Komponente der translatorischen Öffnungs- und Schließbewegung seines als Sitzteller ausgebildeten Verschlussteils senkrecht zu einer Sitzfläche gerichtet ist. Das Hubventil kann aber auch im Rahmen der vorstehenden Ausführungsform als Schieberventil ausgeführt sein, bei dem das als Schieberkolben ausgebildete Verschlussteil bei seiner translatorischen Öffnungs- und Schließbewegung an einer zylindrischen Sitzfläche entlanggleitet. Eine im Sitzteller angeordnete Verschlussteildichtung wirkt axial oder axial/radial mit der zugeordneten Sitzfläche zusammen (Dichtung im sog. Druckeingriff), während eine im Schieberkolben angeordnete Verschlussteildichtung radial mit der zugeordneten zylindrischen Sitzfläche zusammenwirkt (Dichtung im sog. Gleiteingriff). Die translatorische Öffnungs- und Schließbewegung des jeweiligen Verschlussteils wird über einen druckmittelbeaufschlagten Kolbenantrieb, vorzugsweise einen pneumatischen beaufschlagten, generiert, wobei die Rückstellbewegung eines Antriebskolbens in der Regel durch eine Feder, vorzugsweise eine Schraubenfeder, erfolgt. Der Kolbenantrieb kann, bezogen auf das Verschlussteil und die zugeordnete Sitzfläche, federschließend oder federöffnend arbeiten. Zur Reduzierung der Öffnungskräfte des Absperrventils kann die Betätigungsstange des Verschlussteils im Bereich ihrer Durchdringung durch das Ventilgehäuse in Form eines sog. Druckausgleichskolbens ausgebildet sein, so dass die am Verschlussteil in Hubrichtung wirkenden Druckkräfte aus dem im Ventilgehäuse anstehenden Fluid (z.B. Produkt) an der projizierten Stirnfläche des Druckausgleichskolbens eine teilweise bis vollständige Kompensation erfahren.

Prozessventile der vorstehend beschriebenen Art gibt es in vielfältigen Ausführungen, wobei zwecks sicherer Trennung eines im Ventilgehäuse befindlichen Fluids von dem den Antriebskolben im Stellantrieb beaufschlagenden Druckmittel zwischen dem Ventilgehäuse und dem Stellantrieb ein sog. Latemengehäuse angeordnet ist. Die Öffnungsbewegung der Prozessventile erfolgt, bezogen auf die senkrechte Normallage des Ventils, entweder nach oben oder nach unten, so dass man von einem nach oben oder nach unten öffnenden Ventil spricht. Da in der Regel nach unten eine möglichst geringe Bauhöhe erwünscht ist, wird der Stellantrieb im Regelfall oberhalb des Ventilgehäuses angeordnet.

Ein entscheidendes Auswahlkriterium für Prozessventile der in Rede stehenden Art ist nicht nur ihre Bauhöhe nach unten, sondern auch jene nach oben. Letztere wird wesentlich von der Ausbildung des Latemengehäuses und des Stellantriebs bestimmt, wobei letzterer wenigstens eine Bauhöhe für die Feder(n) und für den Ventilhub in Gestalt des Hubes des Antriebskolbens beansprucht (z.B. gemäß DE 30 06 409 A1).

Es sind darüber hinaus Stellantriebe für Hubventile bekannt, die zwei relativ zueinander bewegliche Verschlussteile bzw. Schließglieder (im Folgenden werden die Bezeichnungen "Verschlussteil" und "Schließglied" synonym verwendet) aufweisen und als sog. Doppelsitzventile bezeichnet werden, bei denen sich die axiale Erstreckung des Latemengehäuses, die Längen der notwendigen Federn im Einbauzustand und ggf. der Hub des Antriebskolbens oder der Antriebskolben jeweils vollständig summieren. Ein diesbezügliches Doppelsitzventil, das nach oben, zum Stellantrieb hin, öffnet, ist in der DE 26 23 039 A1 beschrieben. Dieses Doppelsitzventil benötigt, um in der Offenstellung eine Anpresskraft zwischen den beiden Schließgliedern herzustellen, eine zweite Feder, deren Länge sich zur Hauptfeder addiert. Ein nach unten, vom Stellantrieb weg, öffnendes diesbezügliches Doppelsitzventil ist aus der DE 31 06 578 A1 bekannt. Hier wird die zweite Feder, um Bauhöhe zu sparen, im Bauraum der Hauptfeder untergebracht.

Bei den vorstehend erwähnten Doppelsitzventilen werden die Betätigungsstangen der Schließglieder, insbesondere dann, wenn letztere als Schieberkolben ausgeführt sind, in der Regel in Form von sog. Druckausgleichskolben ausgebildet. Um eine hinreichende Kompensation der Kräfte auf das jeweilige Schließglied durch entsprechende Gegenkräfte auf den zugeordneten Druckausgleichskolben sicherzustellen, werden diese Druckausgleichskolben querschnittsmäßig meist bis annähernd auf den wirksamen projizierten Querschnitt des zugeordneten Schließgliedes erweitert. Die dadurch bedingten großen Durchtrittsquerschnitte durch das Ventilgehäuse erschweren zwar einerseits die Abdichtung dieser Druckausgleichskolben, andererseits bietet dafür aber der Druckausgleichskolben in seinem Innern Bauraum für eine bauhöhensparende Aufnahme der Federn des Stellantriebs.

Eine diesbezügliche Lösung ist beispielweise aus der EP 0 834 689 A1 bekannt. Dort ist ein die Hauptfeder bildendes, aus zwei konzentrisch ineinander angeordneten Schraubenfedern bestehendes Federpaket in einem Federkäfig angeordnet, der in einen am oberen Schließglied ausgebildeten Druckausgleichskolben eingreift und an seinem unteren Ende, mit seinem festen Federwiderlager, am Innenraum des benachbarten Ventilgehäuses endet. In der Offenstellung des Doppelsitzventils, das nach unten öffnet, wird ersichtlich, dass das als festes Federwiderlager fungierende untere Ende des Federkäfigs in Bezug auf das Ventilgehäuse unverschieblich ist und im Zuge der Offenstellung des Doppelsitzventils nur das obere Ende des Federpakets eine dem Ventilhub entsprechende axiale Verschiebung erfährt. Damit wird deutlich, dass die Bauhöhe des Stellantriebs wenigstens durch das Ausmaß der axialen Erstreckung des vorgespannten Federpakets in der Schließstellung des Ventils bestimmt ist.

Bei einem in der EP 0 039 319 B2 beschriebenen Doppelsitzventil sind zwei sich in ihrer Einbaulänge addierende Federn im Druckausgleichskolben am oberen Schließglied angeordnet, die bis in den Sitzbereich eingreifen, während der Druckausgleichskolben am unteren Schließglied als Antriebskolben des Stellantriebs fungiert und somit keine zusätzliche Bauhöhe für den Hub des Antriebskolbens erforderlich ist. Durch diese Bauweise des oberen Druckausgleichskolben mit Blick auf die Anordnung der Federn wird zwar zum Einen Bauhöhe eingespart, die aber zum Anderen zu einer Querschnittsverengung im oberen Ventilgehäuse führt. Um diese Verengung zu kompensieren ist wiederum ein größerer Durchtrittsquerschnitt des Ventilgehäuses zumindest im Durchdringungsbereich des zugeordneten Druckausgleichskolbens als jener im Sitzbereich zwischen den beiden Ventilgehäuseteilen erforderlich. Ein Latemengehäuse im klassischen Sinne ist nicht vorgesehen; stattdessen verhindert ein sog. Spülschloss die Vermischung von Druckmittel im Stellantrieb und Fluid im Ventilgehäuse.

Aus der EP 0 174 384 B1 ist ein aus der EP 0 039 319 B2 weiterentwickeltes Doppelsitzventil bekannt, bei dem u.a. zusätzlich zum älteren Doppelsitzventil ein Teilhub eines Antriebskobens für die Sitzreinigung des oberen Schließgliedes vorgesehen ist, der eine zusätzliche Bauhöhe erfordert..

Das vorstehend beschriebene Prinzip der Anordnung einer oder mehrerer Federn innerhalb eines Federkäfigs, der mit seinem als festes Federwiderlager fungierenden unteren Ende in einen Druckausgleichskolben eines Schließgliedes eingreift, das nach unten öffnet, findet auch Anwendung auf Hubventile, die ein einziges Schließglied bzw. Verschlussteil aufweisen. Ein diesbezügliches Hubventil ist unter der firmenmäßigen Bezeichnung **Kode 8222** aus der Firmendruckschrift **HOVAP Varioflow pneumatische Prozessventile, HOVAP INTERNATIONAL (HOLLAND) B.V., Sneek (NL), VAC.9.86.D,** bekannt.

Diese bekannte Lösung ist zwar bauhöhensparender als solche Lösungen, bei denen der Innenraum des Druckausgleichskolbens nicht zur Aufnahme der Antriebsfeder(n) genutzt wird oder werden kann. Es bleibt jedoch der prinzipielle Nachteil, dass die gesamte Länge der Antriebsfeder, und zwar in einer vorgespannten Länge, wie sie in der Schließlage des Hubventils erforderlich ist, vom Stellantrieb aufzunehmen ist. Darüber hinaus umfasst, wie dies im vorliegenden Falle gegeben ist, die Bauhöhe des Ventiis im Bereich seines Stellantriebs zusätzlich noch den vollen Ventilhub, da u.a. zur Führung des Schließgliedes eine mit diesem verbundene Stange durch die Stirnseite des Stellantriebs nach oben herausgeführt ist.

Auch die Art der Verbindung zwischen Ventilgehäuse und Stellantrieb über das Latemengehäuse nimmt Einfluss auf die Bauhöhe des jeweiligen Prozessventils, wobei dieser Einfluss eher gering ist. Entscheidender ist in diesem Zusammenhang der Einfluss dieser Verbindung auf den Montage- und Demontageaufwand sowie auf die Kosten, um diese Verbindung zu realisieren. Es werden seit Jahrzehnten im Wesentlichen die nachfolgend kurz umrissenen drei Arten einer diesbezüglichen Verbindung ausgeführt.

Zum Einen handelt es sich um eine Verbindung mittels Flansche, die miteinander verschraubt werden. Die Druckschriften EP 0 646 741 B1 und EP 0 174 384 B1 zeigen jeweils eine diesbezügliche Verbindung zwischen Ventil- und Latemengehäuse bei einem Doppelsitzventil. Diese Verbindung ist zeitraubend bei der Montage oder Demontage, und eine Verdrehung zwischen Ventilgehäuse und Antrieb ist nur im Rahmen der Umfangsteilung der Verbindungsschrauben möglich.

In der Mehrzahl aller Prozessventile der in Rede stehenden Art wird heute zum Anderen die sog. Klemmflanschverbindung bevorzugt, die beispielsweise in der DE 200 06 594 U1 (Prozessventil mit einem einzigen Schließglied) oder in der DE 38 35 944 A1 oder der EP 0 834 689 A1 (jeweils ein Doppelsitzventil) offenbart ist. Hierbei weisen die miteinander zu verbindenden Gehäuseteile jeweils einen sog. Klemmflansch auf, der an seiner außenseitigen Flanke, radial nach außen, kegelförmig geneigt ist. Das jeweilige Paar Klemmflansche, das sich, radial nach außen, symmetrisch verjüngt, wird durch einen geteilten, nahezu 360 Grad umschlingenden, zu den geneigten Flanken komplementären Spannring zusammen gehalten, wobei die beiden Spannringhälften entweder über ein Gelenk einerseits und eine Schraubenverbindung andererseits oder über zwei Schraubenverbindungen miteinander verbunden und zusammengehalten werden. Eine diesbezügliche Verbindung ist montage- und demontagefreundlich und eine Positionierung des Antriebs gegenüber dem Ventilgehäuse ist in jeder beliebigen Lage möglich. Die Kosten für eine diesbezügliche Verbindung sind allerdings höher als bei einer verschraubten Flanschverbindung.

Schließlich ist bekannt, die Verbindung zwischen Ventil- und Antriebsgehäuse über eine Schraubverbindung (z.B. sog. Rohrverschraubung nach **DIN 11851** oder **DIN 11864**) vorzunehmen (WO 2007/128360 A1). Dabei trägt in der Regel das Latemengehäuse die Nutmutter und das Bolzengewinde ist am Ventilgehäuse angeformt. Diese Verbindung wird bevorzugt bei sterilen verfahrenstechnischen Prozessen angewendet, weil die Nutmutter nach außen weniger Angriffsflächen für eine Verschmutzung bietet als eine verschraubte Flansch- oder Klemmflanschverbindung. Die Kosten sind im Vergleich zu den beiden vorg. Verbindungsarten am höchsten; Nachteile der vorg. Art sind demgegenüber nicht gegeben.

Die Druckschrift DE 90 13 788 U1 beschreibt ein Anschlussstück für ein Zusatzgerät für die Wärme- und Wasserversorgung, insbesondere für einen Wasserzähler, einen Wärmezähler oder einen Filteraufsatz, mit einem Absperrventil, das in einem Gehäuse zwischen einer Durchgangsstellung und einer Absperrstellung drehbar gelagert ist, und mit einem mit dem Gehäuse lösbar verbindbaren Aufsatz für das Zusatzgerät. Hierbei wird der Aufsatz mittels eines Bajonettverschlusses, bei dem ein Bolzen in einer L-förmiger Nut geführt ist, mit dem Gehäuse verbunden. Der Aufsatz ist mit dem Absperrventil derart gekoppelt (dies bedeutet konkret eine Mitnahmeverbindung in Umfangsrichtung, nicht eine Spannverbindung in axialer Richtung), dass bei der Montage des Aufsatzes am Gehäuse das Absperrventil geöffnet und bei der Demontage geschlossen wird.

In der WO 2007/128 360 A1 sind Gehäuseaggregationen für Überwachungs-, Steuerungs- und Regelungssysteme für ein Prozessventil beschrieben. Die jeweilige Gehäuseaggregation besteht aus einer Aneinanderreihung einzelner Gehäuseaufsätze, die über einen bajonettverschlussähnlichen Verbindungsmechanismus miteinander verbunden sind.

Es ist Aufgabe der vorliegenden Erfindung, ein als Hubventil fungierendes Prozessventil der eingangs beschriebenen Art mit einem einheitlichen Verschlussteil bzw. Schließglied (gleich, ob ein- oder mehrstückig) zu schaffen, das insgesamt eine kürzere Bauhöhe als alle bekannten und vergleichbaren diesbezüglichen Ventile aufweist, das sehr einfach in seinem konstruktiven Aufbau ist und darüber hinaus auf die verschiedenen Ausführungsformen wie Absperr-, Tankboden- oder Umschaltventil anwendbar ist.

### ZUSAMMENFASSUNG DER ERFINDUNG

Diese Aufgabe wird durch die Merkmale im Anspruch 1 gelöst. Vorteilhafte Ausführungsformen des Hubventils gemäß der Erfindung sind Gegenstand der Unteransprüche.

Die Lösung der gestellten Aufgabe gelingt durch mehrere Merkmale, die sich teilweise einander bedingen. Hierzu gehört unter Anderem, dass das Ventil nach oben, zu einem Stellantrieb hin, öffnet und dass eine an einem einheitlichen Verschlussteil (gleich, ob ein- oder mehrstückig) befestigte einzige Betätigungsstange wenigsten in ihrem Durchdringungsbereich mit einem Ventilgehäuse in der Weise in ihrem Querschnitt erweitert ist, dass sie dort in einer topfförmigen Ausnehmung einen verschlussteilseitigen Teil einer Antriebsfeder aufnimmt. Weiterhin stützt sich die Antriebsfeder jeweils endseitig unmittelbar oder mittelbar einerseits an der Betätigungsstange und andererseits an einem Deckelteil ab, der ein Antriebsgehäuse auf der dem Verschlussteil abgewandten Seite eines Antriebskolbens begrenzt.

Dabei ist in einer bevorzugten Ausführungsform die Betätigungsstange derart ausgebildet, dass eine querschnittserweiterte Betätigungsstange über eine im Querschnitt kleinere querschnittsreduzierte Betätigungsstange mit dem Verschlussteil verbunden ist. Der Übergangsbereich zwischen der querschnittserweiterten und der querschnittsreduzierten Betätigungsstange wird in einer bevorzugten Ausbildungsform in der Weise genutzt, dass dem Verschlussteil zur Kompensation von Druckstößen im Innenraum des Ventilgehäuses eine Gegendruckfläche an der querschnittserweiterte Betätigungsstange zugeordnet ist. Weiterhin ragt die querschnittserweiterte Betätigungsstange wenigstens um den vollen Ventilhub in das Ventilgehäuse hinein, wobei die Mindestbemessung bevorzugt wird, da ein weitreichenderer Eingriff zu einer nachteiligen Einschnürung des Ventilgehäuses mit einem damit verbundenen erhöhten Strömungswiderstand für den Strömungsfluss im Ventilgehäuse führt. Die Mindestbemessung stellt in der Offenstellung des Absperrventils noch eine sichere Abdichtung zwischen dem Druckausgleichskolben und der zugeordneten Stangendichtung sicher. Optimale Einbaubedingungen ergeben sich für die Antriebsfeder in der topfförmigen Ausnehmung dann, wenn letztere sich, querschnittsmäßig gesehen, ungeschmälert bis zum Antriebskolben fortsetzt und insbesondere dann, wenn ein Topfboden der topfförmigen Ausnehmung ein verschlussteilseitiges Federwiderlager der Antriebsfeder bildet. Damit wird der Deckelteil zu einem festen, unverrückbaren oberen Federwiderlager und der Boden der topfförmigen Ausnehmung zu einem beweglichen, um das Maß des Ventilhubs axial verschieblichen unteren Federwiderlager. Eine diesbezügliche Anordnung der Antriebsfeder reduziert deren erforderlichen Einbauraum auf eine kürzestmögliche axiale Länge, die gegenüber den vorstehend dargestellten Lösungen nach dem Stand der Technik wenigstens um das Maß des vollen Ventilhubs reduziert ist.

Die vorstehend angegebenen Merkmale ergeben eine Ausgestaltung des Stellantriebs, bei der der Hub des Antriebskolbens unterhalb des festen, oberen Federwiderlagers implementiert ist, so dass neben der aus der Schließstellung des Ventils resultierenden Baulänge für die vorgespannte Feder zusätzlich keine weitere Bauhöhe aus dem Kolbenantrieb erforderlich ist.

Um beispielsweise den US-amerikanischen Forderungen des sog. 3-A Sanitary Standards for Compression-Type Valves zu entsprechen, die unter anderem verlangen, dass der Stellantrieb leicht von dem Ventilgehäuse und der Betätigungsstange demontierbar sein muss, sieht eine Ausführungsform des Hubventils gemäß der Erfindung vor, dass zum Zwecke der Demontierung des Stellantriebs vom Ventilgehäuse die Betätigungsstange teilbar gefügt ist. Diesbezüglich ist zweckmäßig die Teilung der querschnittserweiterten Betätigungsstange in einen verschlussteilseitigen Teil der Betätigungsstange und einen antriebsseitigen Teil der Betätigungsstange vorgesehen, wobei eine abgedichtete form- und kraftschlüssige Verbindung dieser Teile über ein Muttergewinde am verschlussteilseitigen Teil und ein Bolzengewinde am antriebsseitigen Teil erfolgt. Der untere Teil verbleibt damit über die querschnittsreduzierte Verbindungsstange am Verschlussteil und der obere Teil der Betätigungsstange ist, gemäß einem weiteren Vorschlag, an einem antriebsseitigen Stangenende mit dem Antriebskolben lösbar verbunden.

Damit bei der Trennung der Betätigungsstange sich die in ihm angeordnete vorgespannte Antriebsfeder nicht unkontrolliert entspannen kann, wird weiterhin vorgeschlagen, dass sich der antriebsseitige Teil der Betätigungsstange an seinem verschlussteilseitigen Ende in einen Topf verlängert, der in den verschlussteilseitigen Teil der Betätigungsstange eingreift und dort die topfförmige Ausnehmung mit einem zweiten Topfboden ausbildet. Dabei erfolgt die Ausbildung der topfförmigen Ausnehmung unter Beibehaltung jener Kontur, wie sie bei der ungeteilten Ausführungsform der Betätigungsstange vorgesehen ist.

Eine weitere Ausführungsform sieht vor, dass das Latemengehäuse einen rohrförmigen Latemenschaft mit einem antriebsseitigen Laternenflansch am einen Ende und Mitteln zur Verbindung des Latemengehäuses mit dem Ventilgehäuse am anderen Ende sowie wenigstens eine im Latemenschaft angeordnete, diesen durchbrechende Latemenöffnung aufweist. Zur weiteren Verkürzung der Bauhöhe des Ventils nach oben trägt ein Vorschlag bei, der vorsieht, dass das Latemengehäuse mit seinem Laternenflansch unmittelbar am Stellantrieb befestigt ist. Diese Verbindung erfolgt zweckmäßig stoffschlüssig am Boden des Antriebsgehäuses, so dass hier die sonst übliche Flansch- oder Klemmflanschverbindung mit den aufwendigen Schließmechanismen entfällt. Eine weitere Kürzung der Bauhöhe wird dadurch erreicht, wie dies auch vorgesehen ist, wenn der Laternenflansch gleichzeitig die ventilgehäuseseitige Begrenzung des Antriebsgehäuses bildet.

Da das Ventilgehäuse mit dem Antriebsgehäuse unmittelbar über das Latemengehäuse verbunden ist und die Betätigungsstange mit der in seiner topfförmigen Ausnehmung Aufnahme findenden Antriebsfeder dieses Latemengehäuse auf dessen gesamter Länge vollständig durchsetzt, beansprucht das Latemengehäuse für sich keine zusätzliche Bauhöhe im Rahmen der Gesamtanordnung.

In vielen Fällen ist es erwünscht, wenn oberhalb des Stellantriebs ein Steuerkopf zur Aufnahme von Mitteln zur Steuerung des Ventils und zur Rückmeldung seiner Stellungen angeordnet werden kann. Zu diesem Zweck ist vorgesehen, dass die Betätigungsstange mit einer Rückmeldestange lösbar verbunden ist, die durch den Stellantrieb konzentrisch hindurchgreift und in der Schließstellung des Hubventil den Deckelteil und einen an diesem außenseits angeformten Klemmflansch, der zum Anschluss des Steuerkopfes dient, durchdringt und die gegenüber dem Klemmflansch überstehend endet.

Das in Rede stehende Hubventil verfügt, wie vorstehend ausgeführt ist, in seinem Sitzbereich entweder über ein ais Sitzteller oder ais Schieberkolben ausgebildetes Verschlussteil. Die axiale Begrenzung des Ventilhubes nach unten erfolgt im letzten Falle beispielsweise durch Anschlag des Antriebskolbens am Boden des Antriebsgehäuses. Beim Sitzteller ist die Sitzfläche entweder eben oder kegelförmig ausgeführt, und er wirkt mit seiner Verschlussteildichtung rein axial bzw. axial/radial mit der zugeordneten Sitzfläche zusammen. Die axiale Begrenzung des Ventilhubes nach unten zum Erreichen einer eindeutig lagebestimmten Schließstellung erfolgt in diesem Falle durch vorzugsweise metallische Anlage des Verschlussteils auf der zugeordneten Sitzfläche, wobei diese metallische Anlage durch geeignete Ausbildung der Dichtungsnut, in die die Verschlussteildichtung in der Schließstellung ausweichen kann, sichergestellt ist.

Das Hubventil gemäß der Erfindung ist entweder federschließend oder federöffnend ausgebildet. Im ersten Falle wird, falls der Antriebskolben nicht druckmittelbeaufschlagt ist, das Verschlussteil über die vorgespannte Antriebsfeder in seine Schließlage verbracht. Dabei stützt sich die Antriebsfeder, wie vorstehend bereits dargestellt, einerseits am Verschlussteil, dem beweglichen unteren Federwiderlager, und andererseits am Deckelteil des Antriebsgehäuses, dem festen oberen Federwiderlager, ab.

Bei einer federöffnenden Ausführungsform wird das Verschlussteil, falls der Antriebskoben nicht druckmittelbeaufschlagt ist, über die vorgespannte Antriebsfeder in seine Offenstellung verbracht. Um dies im Rahmen des erfindungsgemäßen Hubventils zu erreichen, sieht eine diesbezügliche vorteilhafte Aufführungsform vor, dass sich die Antriebsfeder an ihrem dem Verschlussteil zugewandten Ende an einer ersten Stützplatte abstützt, die über eine durch die Antriebsfeder hindurchgreifende Verbindungsstange fest mit dem Deckelteil verbunden ist. Die Antriebsfeder stützt sich an ihrem anderen Ende an einer Angriffsstelle an der Betätigungsstange ab, welche gemäß einer bevorzugten Ausführungsform als eine zweite Stützplatte ausgeführt ist, die zwischen dem Antriebskolben und dem antriebsseitigen Ende der Betätigungsstange fest eingespannt ist.

Nach einem weiteren erfinderischen Gedanken ist das Latemengehäuse mit dem Ventilgehäuse über eine bauhöhensparende Bajonettverbindung oder eine bajonettähnliche Verbindung verbunden. Durch den Bajonettmechanismus können auch an dieser Verbindungsstelle sonst übliche aufwendige Schließmechanismen entfallen, wodurch sich die Gesamtanordnung im Sinne der Aufgabenstellung konstruktiv deutlich weiter vereinfacht.

Eine bevorzugte Ausführungsform der Bajonettverbindung sieht vor, dass der rohrförmige Latemenschaft an seinem ventilgehäuseseitigen Ende wenigstens zwei, in radialer Richtung gesehen, radial nach innen vorspringende latemenseitige Bajonettkragen aufweist, die jeweils durch zwischen diesen ausgebildete laternenseitige Bajonettausnehmungen beiderseits begrenzt sind. Das Ventilgehäuse weist außenseits und im Umfangsbereich der Gehäuseöffnung eine entsprechende Anzahl, in radialer Richtung gesehen, radial nach außen vorspringende ventilgehäuseseitige Bajonettkragen auf, die jeweils durch zwischen diesen ausgebildete ventilgehäuseseitige Bajonettausnehmungen beiderseits begrenzt sind. Die latemenseitigen Bajonettkragen greifen in einer Offenstellung der Bajonettverbindung in die ventilgehäuseseitigen Bajonettausnehmungen ein, und sie hintergreifen in einer Schließstellung der Bajonettverbindung die ventilgehäuseseitigen Bajonettkragen nahezu deckungsgleich.

Werden, wie dies weiterhin vorgeschlagen wird, zwei laternenseitige Bajonettkragen vorgesehen, die diametral einander gegenüberliegen, oder mehr als zwei vorgesehen, die gleichmäßig verteilt über den Umfang des rohrförmigen Laternenschaftes angeordnet sind, dann können das Antriebsgehäuse und damit ein an diesem vorgesehener Druckmittelanschluss wahlweise jeweils um 180 Grad oder um einen kleineren Winkel, der sich aus der Anzahl der Bajonettkragen ergibt, gegenüber dem Ventilgehäuse verdreht und damit in diesen diskreten Lagen an diesem befestigt werden.

Gemäß einem weiteren erfinderischen Gedanken ist die Betätigungsstange in einer rohrförmigen Lagerbuchse geführt, die innerhalb des Laternengehäuses angeordnet und festgelegt ist und die dessen axiale Länge weitestgehend ausnutzt. Diese Führung der Betätigungsstange dient damit auch gleichzeitig der Führung des mit dieser fest verbundenen Antriebskolbens. Da die Betätigungsstange mit dem Verschlussteil fest verbunden ist, erfährt letzterer seine axiale Führung mittelbar ebenfalls über die Lagerbuchse, so dass für diese Führungsmittel gleichfalls keine zusätzliche Bauhöhe im Rahmend er Gesamtanordnung erforderlich ist.

Die Funktion des Laternengehäuses, die neben ihrer mechanischen Verbindungsfunktion die sichere Trennung von Ventil- und Antriebsgehäuse mit den unterschiedlichen und unverträglichen Fluiden darin gewährleistet, wird durch die erwähnte Lagerbuchse nicht beeinträchtigt, da letztere wenigstens eine, in radialer Richtung gesehen, durch die Wandung eines rohrförmigen Buchsenschaftes hindurchgreifende Lagerbuchsenöffnung aufweist. Um eine Abfuhr von Leckagen sicherzustellen, sieht ein weiterer Vorschlag vor, dass die wenigstens eine Lagerbuchsenöffnung wenigstens teilweise von der wenigstens einen Latemenöffnung fluiddurchlässig überdeckt ist. Diese wenigstens teilweise Überdeckung wird beispielsweise durch eine verdrehsichere Anordnung der Lagerbuchse innerhalb des diese aufnehmenden Latemengehäuses, beispielsweise durch eine formschlüssige Verbindung oder Verzahnung, sichergestellt. Dabei stützen die in das Latemengehäuse eingreifenden ventilgehäuseseitigen Bajonettkragen die Lagerbuchse axial nach unten ab.

Die Durchdringungsstelle zwischen der Betätigungsstange und dem Ventilgehäuse erfordert im Bereich der diesbezüglichen Gehäuseöffnung eine Abdichtung mittels einer Stangendichtung, die im Einbauzustand zur Sicherstellung einer hinreichenden Dichtwirkung unter einer ausreichenden radialen Vorspannung stehen muss. Diese radiale Vorspannung im Einbauzustand wird beim erfindungsgemäßen Hubventil erst durch eine minimale axiale Verformung der Stangendichtung im Zuge des Schließvorganges der Bajonettverbindung generiert. Dadurch lassen sich weiterhin die Stangendichtung und das Verschlussteil in Verbindung mit seiner Betätigungsstange leicht und ohne Einsatz von Spezialwerkzeugen demontieren. Dies wird gemäß einer vorteilhaften Ausführungsform dadurch erreicht, dass sich ein ventilgehäuseseitiger Buchsenflansch der Lagerbuchse auf dem Ventilgehäuse, das die Gehäuseöffnung außenseits umschließt, abstützt und dabei die zwischen Gehäuseöffnung und der querschnittserweiterten Betätigungsstange angeordnete Stangendichtung axial vorspannt.

Da nicht auszuschließen ist, dass im Betrieb des Hubventils durch den sog. "Fahrstuhteffekt" Flüssigkeit, Produkt oder Reinigungsmittel, vom Innenraum des Ventilgehäuses aus gesehen, in den Dichtungsbereich und ggf. hinter die Stangendichtung verschleppt wird, muss dafür Sorge getragen werden, dass diese verschleppten Flüssigkeiten zumindest drucklos abfließen können. Zu diesem Zweck ist vorgesehen, dass in die ventilgehäuseseitige Stirnseite der Lagerbuchse mehrere über den Umfang verteilt angeordnete Nuten eingreifen, die die Lagerbuchse an diesen Stellen durchgängig durchsetzen, wobei radial außenseits eine Drainage über die Bajonettverbindung sichergestellt ist.

Gemäß einer anderen vorteilhaften Ausführungsform ist die Bajonettverbindung oder die bajonettähnliche Verbindung in ihrer Schließstellung selbsttätig formschlüssig verriegelt. Diese Verriegelung gelingt durch mehrere Maßnahmen, die sich zum Teil gegenseitig bedingen. Zum Einen ist vorgesehen, dass der rohrförmige Latemenschaft in dem auf den Umfang bezogenen Erstreckungsbereich wenigstens eines latemenseitigen Bajonettkragens einen Schlitz aufweist, der sich vom ventilgehäuseseitigen Ende des Latemenschaftes ein Stück weit axial in diesen und dabei, in radialer Richtung gesehen, durchgängig von innen nach außen erstreckt.

Zum anderen ist vorgesehen, dass jeder ventilgehäuseseitige Bajonettkragen radial außenseits eine in ihrer radialen Tiefe und ihrer Umfangserstreckung begrenzte nutförmige Ausnehmung aufweist, wobei in der Schließstellung der Bajonettverbindung die Ausnehmung, in Umfangsrichtung gesehen, deckungsgleich mit dem zugeordneten Schlitz positioniert ist. In einer bevorzugten Ausgestaltung ist die jeweilige Ausnehmung, in Umfangsrichtung gesehen, mittig im zugeordneten ventilgehäuseseitigen Bajonettkragen angeordnet.

Weiterhin ist im Bereich des ventilgehäuseseitigen Endes der Lagerbuchse an dieser wenigstens eine Nase angeordnet, die zum Einen, in radialer Richtung gesehen, über den äußeren Rand der Lagerbuchse auskragt und die zum Anderen, in axialer Richtung gesehen, über die ventilgehäuseseitige Stirnseite der Lagerbuchse hinausreicht. Diese Nase ist, in radialer Richtung gesehen, federelastisch ausgebildet und greift in den zugeordneten Schlitz ein. Damit ist die vorstehend bereits erwähnte verdrehsichere Fixierung der Lagerbuchse innerhalb des Latemengehäuses sichergestellt

Die selbsttätige Verriegelung der Bajonettverbindung, die gleichzeitig auch ihr unplanmäßiges Öffnen verhindert, gelingt dadurch, dass in Verbindung mit den vorstehend dargestellten Merkmalen in der Schließstellung der Bajonettverbindung das Ende der Nase in die zugeordnete nutförmige Ausnehmung im ventilgehäuseseitigen Bajonettkragen eingreift. Die federelastische Ausbildung der Nase erlaubt es, dass sie sich aus der Offensteliung der Bajonettverbindung heraus zunächst so weit radial nach außen aufbiegen kann, dass sie auf dem Weg in die Schließstellung der Bajonettverbindung über den äußeren Rand des ventilgehäuseseitigen Bajonettkragens übergreift und tangential über diesen hinweggleitet, bis sie unter elastischer Rückverformung nach innen in die nutförmige Ausnehmung formschlüssig einrastet. Damit ist eine formschlüssige Verbindung zwischen Lagerbuchse und damit Latemengehäuse einerseits und Ventilgehäuse andererseits sichergestellt ist.

Die Erfindung sieht weiterhin vor, dass die vorstehend dargestellten jeweiligen Merkmale auf ein Absperrventil Anwendung finden und das Ventilgehäuse in Form eines als Absperrventilgehäuse fungierenden ersten Ventilgehäuses ausgebildet ist.

In gleicher Weise sollen die vorstehend dargestellten jeweiligen Merkmale auf ein Tankbodenventil Anwendung finden, bei dem der zweite Anschlussstutzen von unten in einen Tankboden eines Tanks oder Behälters einmündet und das Ventilgehäuse in Form eines als Tankbodenventilgehäuse fungierenden zweiten Ventilgehäuses ausgebildet ist.

Schließlich sollen die vorstehend dargestellten jeweiligen Merkmale auf ein Umschaltventil Anwendung finden, bei dem das Latemengehäuse über ein wenigstens einen vierten Anschlussstutzen aufweisendes zweites Ventilgehäuseteil mit dem Ventilgehäuseteil verbunden und dadurch das Ventilgehäuse in Form eines als Umschaltventilgehäuse fungierenden dritten Ventilgehäuses ausgebildet ist und bei dem die beiden Ventilgehäuseteile über eine zweite Verbindungsöffnung verbunden sind, in oder an der eine zweite Sitzfläche ausgebildet ist. An der Betätigungsstange ist zusätzlich ein zweiter Verschlussteil befestigt, der über eine radial wirkende zweite Verschlussteildichtung mit der zweiten Sitzfläche zusammenwirkt und die zweite Verbindungsöffnung steuert, wobei in der Schließstellung des zweiten Verschlussteils das ein erstes Verschlussteil bildende Verschlussteil und in der Schließstellung des ersten Verschlussteils das zweite Verschlussteil seine jeweilige Offenstellung einnehmen. Das dritte Ventilgehäuse wird mit Blick auf eine große Anwendungsbreite des erfindungsgemäßen Hubventils zu einem Durchgangsgehäuse, wenn es , wie dies vorgeschlagen wird, an dem zweiten Ventilgehäuseteil zusätzlich zu dem vierten Anschlussstutzen einen fünften Anschlussstutzen aufweist, der dem vierten Anschlussstutzen gegenüberliegt.

Das Ventilgehäuse des vorstehend beschriebenen Absperr-, Tankboden- und des Umschaltventils wird im Bereich seines Ventilgehäuseteils, gleichfalls mit Blick auf die vorsteerwähnte Anwendungsbreite, jeweils zu einem Durchgangsgehäuse, wenn es zusätzlich zu dem ersten Anschlussstutzen einen dritten Anschlussstutzen aufweist, der dem ersten Anschlussstutzen gegenüberliegt.

### KURZBESCHREIBUNG DER ZEICHNUNGEN

Eine eingehendere Darstellung ergibt sich aus der folgenden Beschreibung und den beigefügten Figuren der Zeichnung sowie aus den Ansprüchen. Während die Erfindung in den verschiedensten Ausführungsformen realisiert ist, werden in der Zeichnung jeweils ein Ausführungsbeispiel bevorzugter Ausführungsformen des vorgeschlagenen Hubventils dargestellt und nachfolgend nach Aufbau und Funktion beschrieben unter der Voraussetzung, dass diese Ausführungsformen nur Beispiele für die Erfindung darstellen, nicht aber die Erfindung auf diese speziell dargestellten Beispiele beschränkt ist.

Es zeigen
- **Figur 1**: in perspektivischer Darstellung eine Gesamtansicht des Hubventils gemäß der Erfindung in einer Ausbildung als Absperrventil;
- **Figur 2**: einen Meridianschnitt durch eine bevorzugte Ausführungsform des in seiner Schließstellung befindlichen Absperrventils gemäß **Figur 1** mit einem federschließenden Stellantrieb, wobei die Schnittebene so gewählt ist, dass sie durch die sich in der Schnittebene überdeckenden Laternen- und Lagerbuchsenöffnungen geht;
- **Figur 3**: einen Meridianschnitt durch einen federöffnenden Stellantrieb, wie er alternativ zum federschließenden Stellantrieb am erfindungsgemäßen Hubventil generell Anwendung finden kann;
- **Figur 4**: einen Meridianschnitt durch das erfindungsgemäße Hubventil in einer Ausbildung als Umschaltventil, wobei das in zwei Umschaltstellungen verfahrbare einheitliche Verschlussteil, welches zwei im Abstand voneinander angeordnete alternative Abdichtungsstellen aufweist, durch Druckmittelbeaufschlagung gegen die Kraft der Antriebsfeder in seine obere Umschaltstellung verbracht und die Schnittebene so gewählt ist, dass sie durch eine die Bajonettverbindung verriegelnde Nase an einer Lagerbuchse geht;
- **Figur 5**: einen Meridianschnitt durch das erfindungsgemäße Hubventil in einer Ausbildung als Tankbodenventil, wobei in der dargestellten Schließstellung ein federschließender Stellantrieb mit dem Verschlussteil eine Tankbodenöffnung verschließt und die Schnittebene wiederum so gewählt ist, dass sie durch die sich in der Schnittebene überdeckenden Laternen- und Lagerbuchsenöffnungen geht;
- **Figur 6**: in perspektivischer Darstellung eine Ausführungsform eines Latemengehäuses, das an dem einen Ende einen antriebsseitigen Laternenflansch aufweist, der die ventilgehäuseseitige Begrenzung des Antriebsgehäuses des Stellantriebs bildet, und an dessen anderem Ende die eine Hälfte eines Bajonettverschlusses ersichtlich ist;
- **Figur 7**: in perspektivischer Darstellung eine Ausführungsform eines Ventilgehäuses, wobei an der Oberseite die komplementäre andere Hälfte des Bajonettverschlusses gemäß **Figur 6** ersichtlich ist;
- **Figur 8**: in einer ersten perspektivischen Darstellung eine Ausführungsform einer Lagerbuchse, die zu dem Laternengehäuse gemäß **Figur 6** komplementär ist, wobei der Blick auf die Längsseite und auf die der Verriegelung des Bajonettverschlusses dienende Nase gerichtet ist und
- **Figur 9**: in perspektivischer Darstellung die Lagerbuchse gemäß **Figur 8** aus einem Blickwinkel von unten.

### DETAILLIERTE BESCHREIBUNG

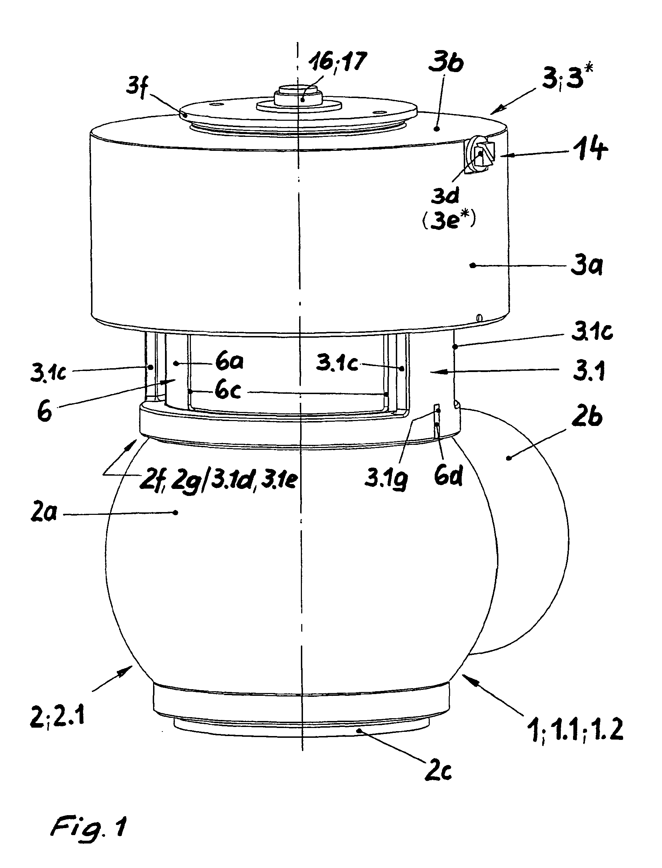

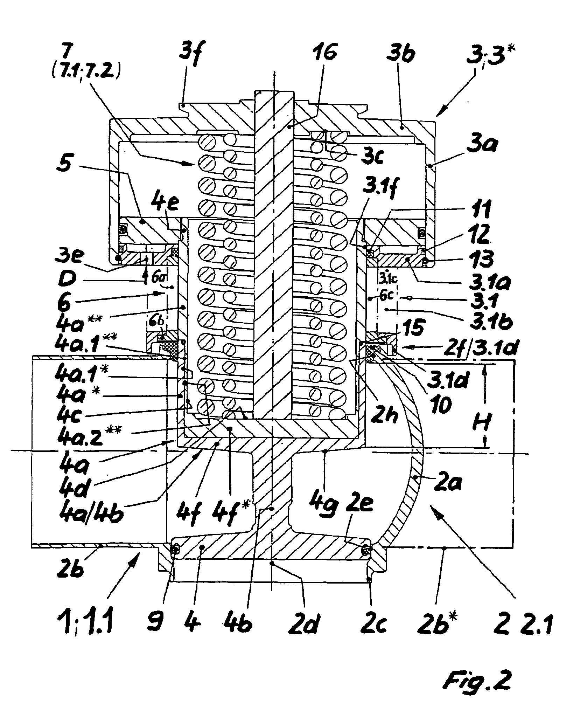

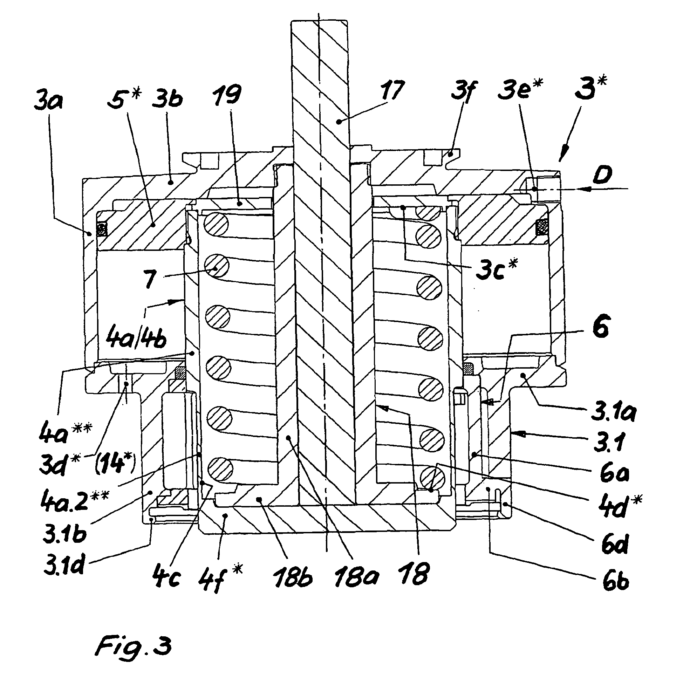

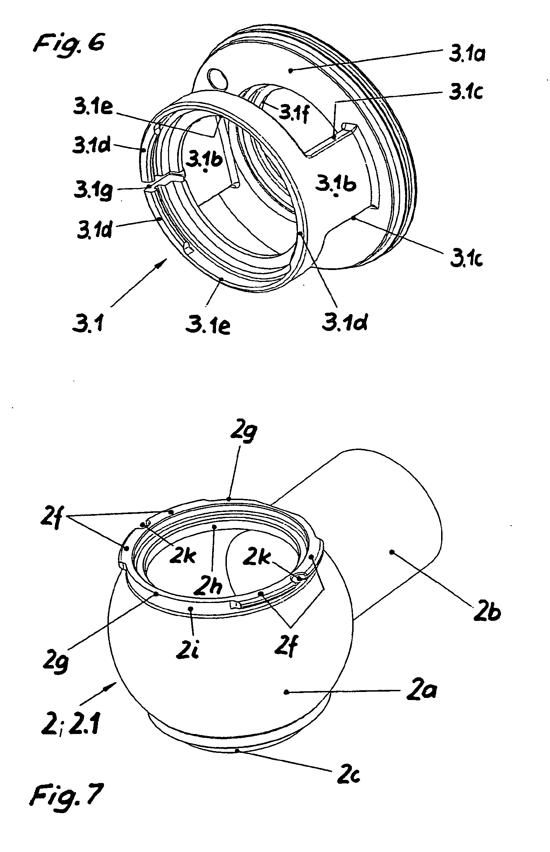

Ein als Absperrventil 1.1 ausgebildetes erfindungsgemäßes Hubventil 1 (**Figur 1**) besteht im Wesentlichen aus einem Ventilgehäuse 2 in Form eines ersten Ventilgehäuses 2.1 (Absperrventilgehäuse), das beispielhaft aus einem zentralen, vorzugsweise kugelförmig ausgebildeten Ventilgehäuseteil 2a, einem davon seitlich abgehenden ersten Anschlussstutzen 2b und einem, bezogen auf die Darstellungslage, nach unten abgehenden zweiten Anschlussstutzen 2c besteht (s. hierzu auch **Figur 7**). Es besteht weiterhin aus einem federschließenden ersten Stellantrieb 3 (**Figur 2**) oder einem federöffnenden zweiten Stellantrieb 3* (**Figur 3**), in dem jeweils ein Antriebskolben 5 bzw. ein modifizierter Antriebskolben 5* über eine in einem Antriebsgehäuse 3a ausgebildete erste bzw. zweite Druckmittelöffnung 3e, 3e* in der Regel mit pneumatischem Druckmittel D (Druckluft) beaufschlagt wird. Die Ent- und Belüftung des Stellantriebs 3, 3* erfolgt im Verlauf der Schaltbewegung auf der jeweils der Druckbeaufschlagung abgewandten Seite des Antriebskolbens 5, 5* über eine erste Entlüftungsöffnung 3d in einem Entlüftungsstopfen 14 (**Figur 1**) bzw. eine zweite Entlüftungsöffnung 3d* in einem zweiten Entlüftungsstopfen 14* (**Figur 3**). Der Stellantrieb 3, 3* ist neben der vorstehend genannten federschließenden oder federöffnenden Ausführungsform auch doppeltwirkend ausgestaltet. Die letztgenannte Ausführungsform, die nicht dargestellt ist, besitzt neben weiteren, hier nicht genannten Modifikationen dieses Stellantriebs eine weitere Druckmittelöffnung auf der anderen Seite des Antriebskolbens 5 bzw. 5* am Antriebsgehäuse 3a. Das Ventilgehäuseteil 2a weist zusätzlich zu dem ersten Anschlussstutzen 2b im Bedarfsfall einen dritten Anschlussstutzen 2b* auf, der dem ersten Anschlussstutzen 2b gegenüberliegt, so dass das Ventilgehäuse 2, 2.1 zu einem Durchgangsgehäuse wird.

Im Ventilgehäuse 2, 2.1 (**Figur 2**) ist zwischen den Anschlussstutzen 2b, 2c eine Verbindungsöffnung 2d angeordnet, in oder an der eine Sitzfläche 2e ausgebildet ist. Ein translatorisch zum Stellantrieb 3 hin verschieblicher Verschlussteil 4 wirkt mit der Sitzfläche 2e zusammen und steuert die Verbindungsöffnung 2d. An dem Verschlussteil 4 ist eine Betätigungsstange 4a/4b befestigt, die durch eine der Verbindungsöffnung 2d gegenüberliegende Gehäuseöffnung 2h des Ventilgehäuses 2, 2.1 aus diesem dichtend herausgeführt und mit dem Antriebskolben 5, 5* des Stellantriebs 3, 3* fest, aber lösbar, verbunden ist. Der Stellantrieb 3, 3* weist in dem Antriebsgehäuse 3a den gegen die Kraft einer Antriebsfeder 7 bzw. 7.1, 7.2 und bei Beaufschlagung mit dem Druckmittel D verschieblichen Antriebskolben 5, 5* auf. Die Betätigungsstange 4a/4b ist wenigstens in ihrem Durchdringungsbereich mit dem Ventilgehäuse 2, 2.1 in der Weise in ihrem Querschnitt erweitert, dass sie dort in einer topfförmigen Ausnehmung 4c einen verschlussteilseitigen Teil der Antriebsfeder 7 bzw. 7.1, 7.2 aufnimmt.

Das Ventilgehäuse 2, 2.1 und der pneumatische Stellantrieb 3, 3* sind über ein Latemengehäuse 3.1 unmittelbar miteinander verbunden. Dabei bildet ein auf der Seite des Stellantriebs 3, 3* am Laternengehäuse 3.1 vorgesehener antriebsseitiger Laternenflansch 3.1a (s. hierzu auch **Figur 6**) die ventilgehäuseseitige Begrenzung des Antriebsgehäuses 3a. Der Stellantrieb 3, 3* ist auf seiner dem Ventilgehäuse 2, 2.1 abgewandten Seite mit einem Deckelteil 3b verschlossen (**Figuren 2****,** **3****,** **1**), der außenseits und zentrisch in einem durchmesserkleineren Klemmflansch 3f seine Fortsetzung findet und auch zentrisch von einer mit der Betätigungsstange 4a/4b vorzugsweise lösbar verbundenen Rückmeldestange 16 bzw. einer modifizierten Rückmeldestange 17 durchdrungen ist. Entweder zeigt in der einfachsten Ausprägung das obere Ende der Rückmeldestange 16, 17 die jeweilige Stellung des Hubventils 1 optisch an oder das obere Ende wird berührend oder berührungsfrei erfasst und über einen am Klemmflansch 3f angeordneten Steuerkopf an eine das Hubventil 1 steuernde interne oder externe Steuerung rückgemeldet.

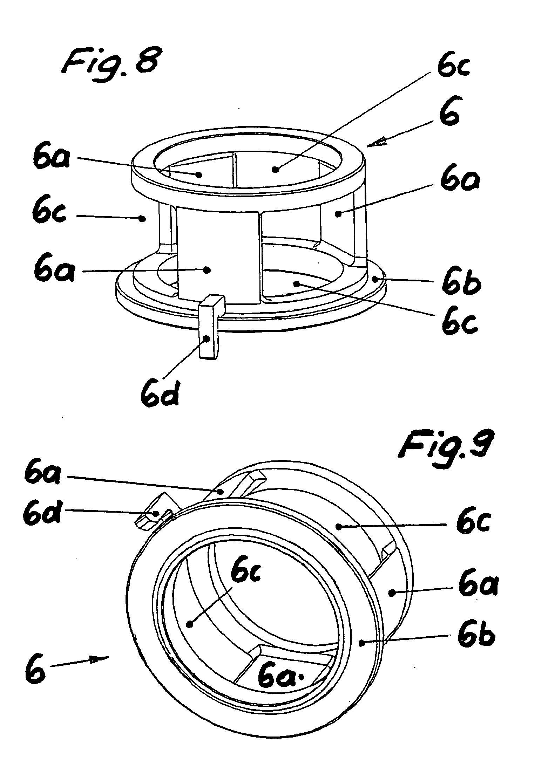

Das Latemengehäuse 3.1 (**Figur 6**) weist einen rohrförmigen Latemenschaft 3.1 b mit dem antriebsseitigen Laternenflansch 3.1a am einen Ende und Mittel 3.1d, 3.1e zur Verbindung des Latemengehäuses 3.1 mit dem Ventilgehäuse 2, 2.1 am anderen Ende sowie zwei diametral im Laternenschaft 3.1b angeordnete, diesen durchbrechende Latemenöffnungen 3.1 c auf. Bei den Mitteln 3.1 d und 3.1 e handelt es sich um einen latemenseitigen Bajonettkragen 3.1d und eine latemenseitige Bajonettausnehmung 3.1e. Die beiden Latemenöffnungen 3.1c sind wenigstens teilweise von drei Lagerbuchsenöffnungen 6c in einer Lagerbuchse 6 (**Figuren 8, 9**) fluiddurchlässig überdeckt (**Figur 1**), so dass über diese Öffnungen 3.1c, 6c eine Verbindung zwischen der Umgebung des Absperrventils 1.1 und einer querschnittserweiterten Betätigungsstange 4a, einem sog. Druckausgleichskolben, besteht (siehe auch **Figur 2**). Die Lagerbuchsenöffnungen 6c sind in einem rohrförmigen Buchsenschaft 6a der Lagerbuchse 6 ausgebildet, wobei der Buchsenschaft 6a an seinem unteren Ende in einen radial nach außen vorspringenden ventilgehäuseseitigen Buchsenflansch 6b übergeht.

Am unteren Ende des Ventilgehäuses 2, 2.1 (**Figur 2**) ist oberhalb des zweiten Anschlussstutzens 2c, der die Verbindungsöffnung 2d beispielsweise zu einer nicht dargestellten, fortführenden Rohrleitung oder zu einem Tank begrenzt, in der Innenwandung des zentralen Ventilgehäuseteils 2a, konzentrisch zu dessen vertikaler Symmetrieachse, die Sitzfläche 2e ausgebildet, die im Ausführungsbeispiel zylindrisch ausgeführt ist und in der der als Schieberkolben ausgebildete Verschlussteil 4 mit seiner Verschlussteildichtung 9 dichtend Aufnahme findet. Die Verschlussteildichtung 9 wirkt rein radial mit der zylindrischen Sitzfläche 2e zusammen und die Schließstellung des Absperrventils 1, 1.1 ist bevorzugt durch einen festen Anschlag des Antriebskolbens 5, 5* im Stellantrieb 3, 3*, vorzugsweise am antriebsseitigen Laternenflansch 3.1 a, begrenzt.

Es ist weiterhin vorgesehen, den Verschlussteil 4 als Sitzteller mit einer axial oder einer axial/radial wirkenden Verschlussteildichtung 9 auszubilden, der mit der zugeordneten Sitzfläche 2e, die dann axial oder kegelförmig ausgeführt ist, zusammenwirkt, und die Schließstellung des Hubventils 1,1.1 durch einen festen Anschlag des Verschlussteils 4 an der jeweiligen Sitzfläche 2e zu begrenzen.

Der Verschlussteil 4 geht oberhalb in eine querschnittsreduzierte Verbindungsstange 4b über (Figur 2), die sich andererseits in die zu dem Druckausgleichskolben ausgebildete querschnittserweiterte Betätigungsstange 4a erweitert. Dem Verschlussteil 4 ist damit zur Kompensation von Druckstößen im Innenraum des Ventilgehäuses 2, 2.1 eine Gegendruckfläche 4g an der querschnittserweiterten Betätigungsstange im Übergangsbereich zur querschnittsreduzierten Betätigungsstange 4b zugeordnet. Die querschnittserweiterte Betätigungsstange 4a setzt sich mit ungeschmälertem Querschnitt nach oben bis zum Antriebskolben 5 fort und ist mit diesem an ihrem antriebsseitigen Stangenende 4e, das vorzugsweise als Bolzengewinde ausgeführt ist, fest, aber lösbar, verbunden. Die querschnittserweiterte Betätigungsstange 4a durchgreift das zentrale Ventilgehäuseteil 2a obenseits in der Gehäuseöffnung 2h (siehe hierzu auch Figur 7), wobei diese gleitende Durchführung mittels einer in der Gehäuseöffnung 2h angeordneten Stangendichtung 10 abgedichtet ist.

Die Betätigungsstange 4a/4b mit dem Verschlussteil 4 ist in der rohrförmigen Lagerbuchse 6 geführt, die innerhalb des Laternengehäuses 3.1 angeordnet und festgelegt ist und die dessen axiale Länge weitestgehend ausnutzt. Dabei stützt sich der ventilgehäuseseitige Buchsenflansch 6b der Lagerbuchse 6 auf dem Ventilgehäuse 2, 2.1, das die Gehäuseöffnung 2h außenseits umschließt, ab und spannt dabei die zwischen der Gehäuseöffnung 2h und der querschnittserweiterten Betätigungsstange 4a angeordnete Stangendichtung 10 axial vor. Die Stangendichtung 10 ist in eine ringförmigen Ausnehmung innerhalb eines ringförmigen Stutzens 2i eingebettet, in den das obere Ende des Ventilgehäuseteils 2a ausmündet (**Figur 7**). In die ventilgehäuseseitige Stirnseite der Lagerbuchse 6 greifen mehrere über den Umfang verteilt angeordnete Nuten ein, die die Lagerbuchse 6 an diesen Stellen durchgängig durchsetzen. Diese Nuten dienen dem weiter oben erwähnten Zweck.

Oberhalb der Lagerbuchse 6 durchdringt die querschnittserweiterte Betätigungsstange 4a den antriebsseitigen Laternenflansch 3.1 a in einer Durchtrittsöffnung 3.1f (**Figuren 6****,** **2**), wobei dieser Durchtritt mittels einer ersten Dichtung 11 des Antriebsgehäuses 3a abgedichtet ist. Diese erste Dichtung 11 stellt sicher, dass kein Druckmittel D, das dem zwischen der Unterseite des Antriebskolbens 5, dem Antriebsgehäuse 3a und dem antriebsseitigen Laternenflansch 3.1 a gebildeten Raum auf dem Weg über die erste Druckmittelöffnung 3e zugeführt wird, von diesem Raum in den Ringspalt zwischen Lagerbuchse 6 und querschnittserweiterten Betätigungsstange 4a entweichen kann. Die Abdichtung des antriebsseitigen Latemenflansches 3.1 a gegenüber dem Antriebsgehäuse 3a erfolgt über eine zweite Dichtung 12, seine Festlegung im Antriebsgehäuse 3a wird über einen Sicherungsring 13 erreicht. Der Antriebskolben 5 ist gegenüber der innenseitigen Mantelfläche des Antriebsgehäuses 3a mittels einer nicht bezeichneten Kolbendichtung gleitend abgedichtet.

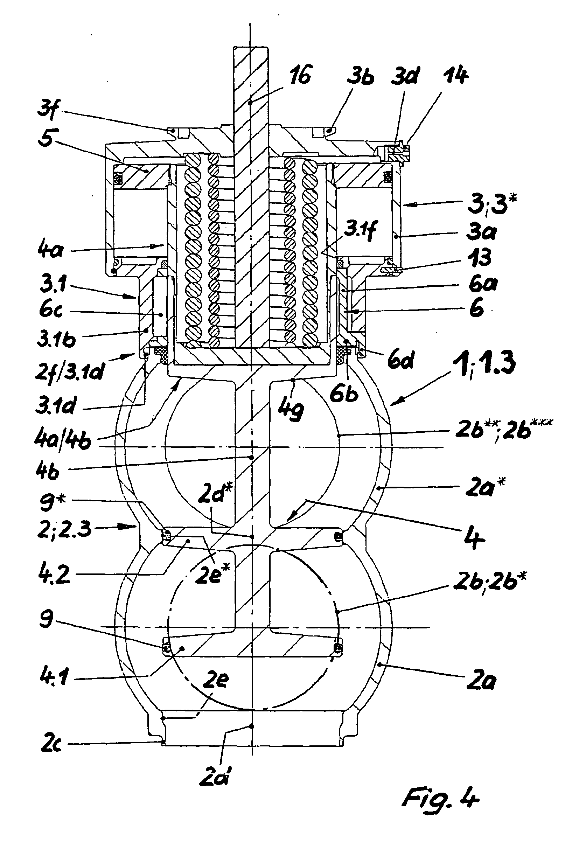

In der querschnittserweiterten Betätigungsstange 4a ist die topfförmige Ausnehmung 4c ausgebildet, die sich, querschnittsmäßig gesehen, vom antriebsseitigen Stangenende 4e beginnend, ungeschmälert bis an das untere Ende der querschnittserweiterten Betätigungsstange 4a erstreckt. Dabei ragt die querschnittserweiterte Betätigungsstange 4a in der Schließstellung des Absperrventils 1.1 wenigstens um den vollen Ventihub H in das Ventilgehäuseteil 2a hinein (**Figur 2**), so dass in der Offenstellung des Absperrventils 1.1, das zum Stellantrieb 3 hin öffnet, d.h. nach Vollzug des vollen Öffnungshubes H, das untere Ende der querschnittserweiterten Betätigungsstange 4a gerade noch gegenüber der Stangendichtung 10 eine radiale Abdichtung erfährt (siehe auch **Figur 4**). Ein Topfboden 4f bzw. 4f* der topfförmigen Ausnehmung 4c dient der Antriebsfeder 7 bzw. 7.1, 7.2, die vorzugsweise als Schraubenfeder ausgeführt ist und die aus mehr als einer Antriebsfeder in Form eines Federpakets 7.1, 7.2 bestehen kann, als bewegliches, verschlussteilseitiges Federwiderlager 4d. Die Antriebsfeder 7 bzw. 7.1, 7.2 stützt sich andererseits an dem Deckelteil 3b des Stellantriebs 3 ab, wobei zwecks zentrischer Fixierung der Antriebsfeder 7 bzw. 7.1, 7.2 dort vorzugsweise eine nicht bezeichnete kreisförmige Ausnehmung vorgesehen ist. Der Deckelteil 3b bildet somit ein unverschiebliches, antriebsseitiges Federwiderlager 3c.

Zur Erfüllung der US-amerikanischen Forderungen im Zusammenhang mit den vorstehend erwähnten sog. 3-A Sanitary Standards for Compression-Type Valves, die unter anderem verlangen, dass der Stellantrieb 3, 3* leicht von dem Ventilgehäuse 2, 2.1 und der Betätigungsstange 4a/4b des Verschlussteils 4 demontierbar sein muss, ist die Betätigungsstange 4a/4b teilbar gefügt (**Figur 2**). Diese Teilung erfolgt vorzugsweise im Bereich der querschnittserweiterten Betätigungsstange 4a, und zwar in einen verschlussteilseitigen Teil der Betätigungsstange 4a* und einen antriebsseitigen Teil der Betätigungsstange 4a**. Eine mittels einer dritten Dichtung 15 abgedichtete form- und kraftschlüssige Verbindung dieser Teile 4a*, 4a** erfolgt über ein Muttergewinde 4a.1* am verschlussteilseitigen Teil 4a* und ein Bolzengewinde 4a.1** am antriebsseitigen Teil 4a**. Der antriebsseitige Teil der Betätigungsstange 4a** verlängert sich an seinem verschlussteilseitigen Ende in einen Topf 4a.2**, der in den verschlussteilseitigen Teil der Betätigungsstange 4a* eingreift und dort die topfförmige Ausnehmung 4c mit dem zweiten Topfboden 4f* ausbildet. Somit verbleibt bei der Trennung der querschnittserweiterten Betätigungsstange 4a ein unterer Teil 4a* über die querschnittsreduzierte Verbindungsstange 4b am Verschlussteil 4 und ein oberer Teil 4a** ist mit dem Antriebskolben 5 fest, aber lösbar, verbunden. Der Topf 4a.2**, der innenseits die Kontur der topfförmigen Ausnehmung 4c aufweist, wie sie bei der ungeteilten Ausführung vorgesehen ist, verhindert, dass sich bei der Trennung der Teile 4a*, 4a** die in ihm angeordnete vorgespannte Antriebsfeder 7 bzw. 7.1, 7.2 unkontrolliert entspannen kann.

Der federöffnende Stellantrieb 3* ist, bis auf die Abstützung der Antriebsfeder 7 bzw. 7.1, 7.2 mit den zugeordneten Federwiderlagern, weitestgehend baugleich mit dem federschließenden Stellantrieb 3 (**Figur 3**). Bei letzterem stützt sich die Antriebsfeder 7 bzw. 7.1, 7.2 an ihrem dem Verschlussteil 4 zugewandten Ende an einer endseitig an einer Verbindungsstange 18a angeformten ersten Stützplatte 18b ab, wobei die durch die Antriebsfeder 7 bzw. 7.1, 7.2 hindurchgreifende Verbindungsstange 18a mit dem Deckelteil 3b fest, aber lösbar, verbunden ist. Verbindungsstange 18a und erste Stützplatte 18b bilden somit einen ortsfesten Käfigteil 18, der von der modifizierten Rückmeldestange 17 auf der ganzen axialen Länge konzentrisch durchdrungen ist. Die Antriebsfeder 7 bzw. 7.1, 7.2 stützt sich an ihrem anderen Ende an einer zweiten Stützplatte 19 ab, die zwischen dem Antriebskolben 5* und dem antriebsseitigen Ende der Betätigungsstange 4a/4b fest eingespannt ist. Somit bilden die erste Stützplatte 18b ein modifiziertes verschlussteilseitiges Federwiderlager 4d* und die zweite Stützplatte 19 ein modifiziertes verschlussteilfernes Federwiderlager 3c*.

Eine form- und kraftschlüssige Verbindung zwischen dem Ventilgehäuse 2, 2.1 einerseits und dem Latemengehäuse 3.1 und damit auch dem Stellantrieb 3, 3* andererseits ist mit einer Bajonettverbindung 2f, 2g/3.1d, 3.1e oder einer bajonettverschlussähnliche Verbindung vorgesehen (**Figur 1** in Verbindung mit den **Figuren 2****,** **6, 7**). Hierzu weist der rohrförmige Latemenschaft 3.1 b (**Figur 6**) an seinem ventilgehäuseseitigen Ende wenigstens zwei, in radialer Richtung gesehen, radial nach innen vorspringende latemenseitige Bajonettkragen 3.1d auf, die jeweils durch zwischen diesen ausgebildete latemenseitige Bajonettausnehmungen 3.1e beiderseits begrenzt sind. Das Ventilgehäuse 2, 2.1 (**Figur 7**) besitzt, außenseits und im Umfangsbereich der Gehäuseöffnung 2h, eine entsprechende Anzahl, in radialer Richtung gesehen, radial nach außen vorspringende ventilgehäuseseitige Bajonettkragen 2f, die jeweils durch zwischen diesen ausgebildete ventilgehäuseseitige Bajonettausnehmungen 2g beiderseits begrenzt sind. Die latemenseitigen Bajonettkragen 3.1d greifen in einer Offenstellung der Bajonettverbindung in die ventilgehäuseseitigen Bajonettausnehmungen 2g ein, und sie hintergreifen in einer Schließstellung der Bajonettverbindung die ventilgehäuseseitigen Bajonettkragen 2f nahezu deckungsgleich (Bajonettverschluss 2f/3.1d).

Die beiden ventilgehäuseseitigen Bajonettkragen 2f sind gegenüber dem ersten Anschlussstutzen 2b vorzugsweise jeweils um 90 Grad versetzt am Ventilgehäuseteil 2a angeordnet, so dass das vorzugsweise stoffschlüssige Fügen der Verbindung zwischen erstem Anschlussstutzen 2b und Ventilgehäuseteil 2a, das in der Regel durch maschinelle orbitale Schweißung erfolgt, durch diese ventilgehäuseseitigen Bajonettkragen 2f nicht behindert wird. Die ventilgehäuseseitige Bajonettausnehmung 2g greift radial innenseits jeweils bis auf den ringförmigen Stutzen 2i ein. Im dargestellten Ausführungsbeispiel bilden zwei diametral angeordnete ventilgehäuseseitigen Bajonettkragen 2f und entsprechend zwei ventilgehäuseseitige Bajonettausnehmungen 2g den einen Teil der Bajonettverbindung 2f, 2g/3.1d, 3.1 e. Die zwei diametral angeordneten laternenseitigen Bajonettkragen 3.1d und die zwei latemenseitigen Bajonettausnehmungen 3.1e bilden den anderen Teil der Bajonettverbindung 2f, 2g/3.1d, 3.1e. Eine andere vorteilhafte Ausführungsform der Bajonettverbindung 2f, 2g/3.1d, 3.1 e sieht mehr als zwei latemenseitige Bajonettkragen 3.1 d vor, die gleichmäßig verteilt über den Umfang des rohrförmigen Latemenschaftes 3.1 b angeordnet sind. Der ventilgehäuseseitige Teil der Bajonettverbindung 2f, 2g ist in diesem Fall komplementär ausgebildet.

Die Bajonettverbindung 2f, 2g/3.1d, 3.1e oder die bajonettähnliche Verbindung ist in ihrer Schließstellung selbsttätig formschlüssig verriegelt (**Figuren 1****,** **4****,** **6, 7**). Zu diesem Zweck weist der rohrförmige Latemenschaft 3.1 b in dem auf den Umfang bezogenen Erstreckungsbereich wenigstens eines latemenseitigen Bajonettkragens 3.1 d einen Schlitz 3.1 g auf (**Figuren 6****,** **1**), der sich vom ventilgehäuseseitigen Ende des Latemenschaftes 3.1 b ein Stück weit axial in diesen und dabei, in radialer Richtung gesehen, durchgängig von innen nach außen erstreckt.

Jeder ventilgehäuseseitige Bajonettkragen 2f besitzt radial außenseits eine in ihrer radialen Tiefe und ihrer Umfangserstreckung begrenzte nutförmige Ausnehmung 2k (**Figur 7**), wobei in der Schließstellung der Bajonettverbindung die Ausnehmung 2k, in Umfangsrichtung gesehen, deckungsgleich mit dem zugeordneten Schlitz 3.1g positioniert ist. Dabei ist die jeweilige Ausnehmung 2k, in Umfangsrichtung gesehen, vorzugsweise mittig im zugeordneten ventilgehäuseseitigen Bajonettkragen 2f angeordnet.

Im Bereich des ventilgehäuseseitigen Endes der Lagerbuchse 6 ist an dieser wenigstens eine Nase 6d angeordnet (Figuren 8**, 9,** **4****,** **1**), die zum Einen, in radialer Richtung gesehen, über den äußeren Rand der Lagerbuchse 6 auskragt und die zum Anderen, in axialer Richtung gesehen, über die ventilgehäuseseitige Stirnseite der Lagerbuchse 6 hinausreicht. Die Nase 6d ist, in radialer Richtung gesehen, federelastisch ausgebildet und greift in den zugeordneten Schlitz 3.1g ein (**Figur 1**), wodurch eine eindeutige Festlegung der Lagerbuchse 6 in dem Laternengehäuse 3.1 in Umfangsrichtung sichergestellt ist.

Zur selbsttätigen formschlüssigen Verriegelung der Bajonettverbindung 2f, 2g/3.1d, 3.1e ist vorgesehen, dass in deren Schließstellung das Ende der Nase 6d in die zugeordnete Ausnehmung 2k eingreift (**Figur 4**).

Die vorstehend beschriebenen Merkmale des erfindungsgemäßen Hubventils 1 finden in vorteilhafter Weise Anwendung auf ein Umschaltventil 1.3 (**Figur 4**), bei dem das Laternengehäuse 3.1 über ein wenigstens einen vierten Anschlussstutzen 2b** aufweisendes zweites Ventilgehäuseteil 2a* mit dem Ventilgehäuseteil 2a verbunden und dadurch das Ventilgehäuse 2, 2.3 in Form eines als Umschaltventilgehäuse fungierenden dritten Ventilgehäuses 2.3 ausgebildet ist. Die beiden Ventilgehäuseteile 2a, 2a* sind über eine zweite Verbindungsöffnung 2d* verbunden, in oder an der eine zylindrisch ausgebildete zweite Sitzfläche 2e* ausgebildet ist. An der Betätigungsstange 4a/4b ist im Bereich der querschnittsreduzierten Betätigungsstange 4b zusätzlich ein zweiter Verschlussteil 4.2 befestigt, der über eine radial wirkende zweite Verschlussteildichtung 9* mit der zweiten Sitzfläche 2e* zusammenwirkt und die zweite Verbindungsöffnung 2d* steuert. In der Schließstellung des zweiten Verschlussteils 4.2 nimmt das ein erstes Verschlussteil 4.1 bildende Verschlussteil 4 und in der Schließstellung des ersten Verschlussteils 4.1 nimmt das zweite Verschlussteil 4.2 seine jeweilige Offenstellung ein.

Aus dem Ventilgehäuseteil 2a wird im Bedarfsfall ein Durchgangsgehäuse, wenn dieses zusätzlich zu dem ersten Anschlussstutzen 2b einen dritten Anschlussstutzen 2b* aufweist, der dem ersten Anschlussstutzen 2b gegenüberliegt. In äquivalenter Weise wird aus dem zweiten Ventilgehäuseteil 2a* im Bedarfsfall ein Durchgangsgehäuse, wenn dieses zusätzlich zu dem vierten Anschlussstutzen 2b** einen fünften Anschlussstutzen 2b*** aufweist, der dem vierten Anschlussstutzen 2b** gegenüberliegt.

Mit der vorstehenden Konfiguration wird die Umschaltfunktion realisiert, bei der in der dargestellten oberen Stellung des Verschlussteils 4, in der sein zweiter Verschlussteil 4.2 eine Schließstellung einnimmt, eine Verbindung zwischen dem ersten und ggf. dritten Anschlussstutzen 2b bzw. 2b* einerseits und dem zweiten Anschlussstutzen 2c andererseits hergestellt ist. In der unteren Stellung des Verschlussteils 4, in der sein erster Verschlussteil 4.1 eine Schließstellung einnimmt, sind der vierte und ggf. fünfte Anschlussstutzen 2b** bzw. 2b*** einerseits mit dem ersten und ggf. dritten Anschlussstutzen 2b bzw. 2b* andererseits verbunden.

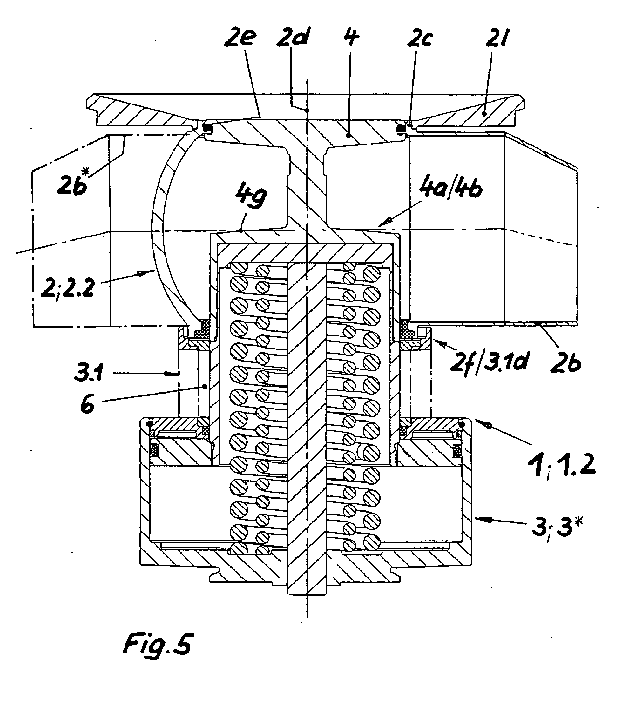

Gemäß einem weiteren Vorschlag finden die vorstehend beschriebenen Merkmale des erfindungsgemäßen Hubventils 1 auf ein Tankbodenventil 1.2 Anwendung (**Figur 5**), bei dem der zweite Anschlussstutzen 2c von unten in einen Tankboden 2l eines Tanks oder Behälters einmündet und das Ventilgehäuse 2, 2.2 in Form eines als Tankbodenventilgehäuse fungierenden zweiten Ventilgehäuses 2.2 ausgebildet ist. Aus letzterem wird im Bedarfsfall ein Durchgangsgehäuse, wenn dieses an dem Ventilgehäuseteil 2a zusätzlich zu dem ersten Anschlussstutzen 2b einen dritten Anschlussstutzen 2b* aufweist, der dem ersten Anschlussstutzen 2b gegenüberliegt.

Aus dem oben Genannten wird verständlich, dass verschiedene Modifikationen und Varianten realisiert werden können, ohne vom Geist und dem neuen Konzept der vorliegenden Erfindung abzuweichen. Dies ist so zu verstehen, dass keine Beschränkung auf die beschriebenen Ausführungsformen beabsichtigt ist, welche hier dargestellt und beschrieben oder nur beschrieben worden sind. Die Offenbarung soll alle solchen Modifikationen umfassen, die sich innerhalb des von den Ansprüchen beanspruchten Schutzumfangs befinden.

### BEZUGSZEICHENLISTE DER VERWENDETEN ABKÜRZUNGEN

- 1: Hubventil (allgemein)
- 1.1: Absperrventil
- 1.2: Tankbodenventil
- 1.3: Umschaltventil

- 2: Ventilgehäuse (allgemein)

- 2a: Ventilgehäuseteil
- 2b: erster Anschlussstutzen
- 2c: zweiter Anschlussstutzen
- 2d: Verbindungsöffnung
- 2e: Sitzfläche (zylindrisch; kegelförmig, axial)
- 2f: ventilgehäuseseitiger Bajonettkragen
- 2g: ventilgehäuseseitige Bajonettausnehmung
- 2h: Gehäuseöffnung
- 2i: ringförmiger Stutzen
- 2k: nutförmige Ausnehmung

### Absperrventil (1.1)

- 2.1: erstes Ventilgehäuse (Absperrventilgehäuse)
- 2b*: dritter Anschlussstutzen

### Tankbodenventil (1.2)

- 2.2: zweites Ventilgehäuse (Tankbodenventilgehäuse)
- 2b*: dritter Anschlussstutzen
- 2l: Tankboden

### Umschaltventil (1.3)

- 2.3: drittes Ventilgehäuse (Umschaltventilgehäuse)
- 2a*: zweites Ventilgehäuseteil
- 2b*: dritter Anschlussstutzen
- 2b**: vierter Anschlussstutzen
- 2b***: fünfter Anschlussstutzen
- 2d*: zweite Verbindungsöffnung
- 2e*: (zylindrische) zweite Sitzfläche

- 4.1: erster Verschlussteil
- 4.2: zweiter Verschlussteil

- 9*: zweite Verschlussteildichtung

- 3: erster Stellantrieb (federschließend)
- 3a: Antriebsgehäuse
- 3b: Deckelteil
- 3c: antriebsseitiges Federwiderlager
- 3d: erste Entlüftungsöffnung
- 3e: erste Druckmittelöffnung
- 3f: Klemmflansch

- 3.1: Latemengehäuse
- 3.1 a: antriebsseitiger Laternenflansch
- 3.1 b: rohrförmiger Latemenschaft
- 3.1 c: Latemenöffnung
- 3.1 d: laternenseitiger Bajonettkragen
- 3.1 e: latemenseitige Bajonettausnehmung
- 3.1f: Durchtrittsöffnung
- 3.1 g: Schlitz

- 2f, 2g/3.1d, 3.1e: Bajonetverbindung
- 2f/3.1 d: Bajonettverschluss

- 4: Verschlussteil (allgemein)
- 4a/4b: Betätigungsstange
- 4a: querschnittserweiterte Betätigungsstange (Druckausgleichskolben)
- 4b: querschnittsreduzierte Betätigungsstange
- 4c: topfförmige Ausnehmung
- 4d: verschlussteilseitiges Federwiderlager
- 4e: antriebsseitiges Stangenende
- 4f: Topfboden
- 4f*: zweiter Topfboden
- 4g: Gegendruckfläche

- 4a*: verschlussteilseitiger Teil der Betätigungsstang 4a
- 4a**: antriebsseitiger Teil der Betätigungsstange 4a
- 4a.1*: Muttergewinde (am unteren Teil 4a*)
- 4a.1**: Bolzengewinde (am oberen Teil 4a**)
- 4a.2**: Topf

- 5: Antriebskolben

- 6: Lagerbuchse
- 6a: rohrförmiger Buchsenschaft
- 6b: ventilgehäuseseitiger Buchsenflansch
- 6c: Lagerbuchsenöffnung
- 6d: Nase

- 7: Antriebsfeder
- 7.1: erste Antriebsfeder
- 7.2: zweite Antriebsfeder

- 9: Verschlussteildichtung

- 10: Stangendichtung
- 11: erste Dichtung (Antriebsgehäuse)
- 12: zweite Dichtung (Antriebsgehäuse)
- 13: Sicherungsring
- 14: Entlüftungsstopfen
- 15: dritte Dichtung (Druckausgleichskolben)
- 16: Rückmeldestange

### Stellantrieb (federöffnend)

- 3*: zweiter Stellantrieb (federöffnend)
- 3c*: modifiziertes verschlussteilfernes Federwiderlager
- 3d*: zweite Entlüftungsöffnung
- 3e*: zweite Druckmittelöffnung
- 4d*: modifiziertes verschlussteilseitiges Federwiderlager
- 5*: modifizierter Antriebskolben

- 14*: zweiter Entlüftungsstopfen
- 17: modifizierte Rückmeldestange

- 18: Käfigteil (ortsfest)
- 18a: Verbindungsstange (ortsfest)
- 18b: erste Stützplatte (ortsfest)

- 19: zweite Stützplatte (beweglich)

- D: Druckmittel
- H: (voller) Ventilhub

## Patentansprüche

1. Hubventil (1; 1.1; 1.2; 1.3), insbesondere für die Prozesstechnik,
mit einem aus wenigstens einem Ventilgehäuseteil (2a) bestehenden Ventilgehäuse (2; 2.1; 2.2; 2.3), mit wenigstens einem ersten und einem zweiten Anschlussstutzen (2b, 2c), die an den Ventilgehäuseteil (2a) angeschlossen sind und eine Verbindung zu dessen Innenraum herstellen, mit einer im Ventilgehäuse (2; 2.1; 2.2; 2.3) zwischen den Anschlussstutzen (2b, 2c) angeordneten Verbindungsöffnung (2d), in oder an der eine Sitzfläche (2e) ausgebildet ist, mit einem translatorisch verschieblichen einheitlichen Verschlussteil (4; 4.1), der mit der Sitzfläche (2e) zusammenwirkt und die Verbindungsöffnung (2d) steuert, mit einer an dem Verschlussteil (4; 4.1) befestigten einzigen Betätigungsstange (4a/4b), die durch eine der Verbindungsöffnung (2d) gegenüberliegende Gehäuseöffnung (2h) des Ventilgehäuses (2; 2.1; 2.2; 2.3) aus diesem dichtend herausgeführt und mit einem Antriebskolben (5; 5*) eines Stellantriebs (3; 3*) verbunden ist, mit einem das Ventilgehäuse (2; 2.1; 2.2; 2.3) mit dem Stellantrieb (3; 3*) verbindenden Latemengehäuse (3.1), mit dem Stellantrieb (3; 3*), der in einem Antriebsgehäuse (3a) den gegen die Kraft einer Antriebsfeder (7; 7.1, 7.2) und bei Beaufschlagung mit einem Druckmittel (D) verschieblichen Antriebskolben (5; 5*) aufweist, und mit der Betätigungsstange (4a/4b), die wenigstens in ihrem Durchdringungsbereich mit dem Ventilgehäuse (2; 2.1; 2.2; 2.3) in der Weise in ihrem Querschnitt erweitert ist, dass sie dort in einer topfförmigen Ausnehmung (4c) einen verschlussteilseitigen Teil der Antriebsfeder (7; 7.1, 7.2) aufnimmt,
**dadurch gekennzeichnet,**
**dass** der Verschlussteil (4; 4.1) zum Stellantrieb (3; 3*) hin öffnet, und dass sich die Antriebsfeder (7; 7.1, 7.2) jeweils endseitig unmittelbar oder mittelbar einerseits an der Betätigungsstange (4a/4b) und andererseits an einem Deckelteil (3b) abstützt, der das Antriebsgehäuse (3a) auf der dem Verschlussteil (4; 4.1) abgewandten Seite des Antriebskolbens (5; 5*) begrenzt.

2. Hubventil nach Anspruch 1
**dadurch gekennzeichnet,**
**dass** die Betätigungsstange (4a/4b) derart ausgebildet ist, dass eine querschnittserweiterte Betätigungsstange (4a) über eine im Querschnitt kleinere querschnittsreduzierte Betätigungsstange (4b) mit dem Verschlussteil (4) verbunden ist.

3. Hubventil nach Anspruch 2
**dadurch gekennzeichnet,**
**dass** dem Verschlussteil (4) zur Kompensation von Druckstößen im Innenraum des Ventilgehäuses (2; 2.1; 2.2; 2.3) eine Gegendruckfläche (4g) an der querschnittserweiterten Betätigungsstange (4a) im Übergangsbereich zur querschnittsreduzierten Betätigungsstange (4b) zugeordnet ist.

4. Hubventil nach einem der Ansprüche 1 bis 3,
**dadurch gekennzeichnet,**
**dass** die querschnittserweiterte Betätigungsstange (4a) wenigstens um den vollen Ventilhub (H) in das Ventilgehäuse (2; 2.1; 2.2; 2.3) hineinragt.

5. Hubventil nach einem der Ansprüche 1 bis 4,
**dadurch gekennzeichnet,**
**dass** sich die topfförmige Ausnehmung (4c), querschnittsmäßig gesehen, ungeschmälert bis zum Antriebskolben (5; 5*) fortsetzt.

6. Hubventil nach einem der Ansprüche 1 bis 5,
**dadurch gekennzeichnet,**
**dass** ein Topfboden (4f; 4f*) der topfförmigen Ausnehmung (4c) ein verschlussteilseitiges Federwiderlager (4d) der Antriebsfeder (7; 7.1, 7.2) bildet.

7. Hubventil nach einem der Ansprüche 1 bis 6,
**dadurch gekennzeichnet,**
**dass** zum Zwecke der Demontierung des Stellantriebs (3; 3*) vom Ventilgehäuse (2; 2.1; 2.2; 2.3) die Betätigungsstange (4a/4b) teilbar gefügt ist.

8. Hubventil nach Anspruch 7,
**dadurch gekennzeichnet,**
**dass** die Teilung der querschnittserweiterten Betätigungsstange (4a) in einen verschlussteilseitigen Teil der Betätigungsstange (4a*) und einen antriebsseitigen Teil der Betätigungsstange (4a**) vorgesehen ist, und dass eine abgedichtete form- und kraftschlüssige Verbindung dieser Teile (4a*, 4a**) über ein Muttergewinde (4a.1*) am verschlussteilseitigen Teil (4a*) und ein Bolzengewinde (4a.1**) am antriebsseitigen Teil (4a**) erfolgt.

9. Hubventil nach einem der Ansprüche 1 bis 8,
**dadurch gekennzeichnet,**
**dass** das Laternengehäuse (3.1) einen rohrförmigen Laternenschaft (3.1b) mit einem antriebsseitigen Laternenflansch (3.1a) am einen Ende und Mitteln (3.1d, 3.1e) zur Verbindung des Laternengehäuses (3.1) mit dem Ventilgehäuse (2; 2.1; 2.2; 2.3) am anderen Ende sowie wenigstens eine im Laternenschaft (3.1b) angeordnete, diesen durchbrechende Laternenöffnung (3.1c) aufweist.

10. Hubventil nach einem der Ansprüche 1 bis 9,
**dadurch gekennzeichnet,**
**dass** sich die Antriebsfeder (7; 7.1, 7.2) an ihrem dem Verschlussteil (4; 4.1) zugewandten Ende an einer ersten Stützplatte (18b) abstützt, die über eine durch die Antriebsfeder (7; 7.1, 7.2) hindurchgreifende Verbindungsstange (18a) fest mit dem Deckelteil (3b) verbunden ist, und dass sich die Antriebsfeder (7; 7.1, 7.2) an ihrem anderen Ende an einer zweiten Stützplatte (19) abstützt, die zwischen dem Antriebskolben (5*) und dem antriebsseitigen Ende der Betätigungsstange (4a/4b) fest eingespannt ist.

11. Hubventil nach einem der Ansprüche 1 bis 10,
**dadurch gekennzeichnet,**
**dass** das Latemengehäuse (3.1) an dem Ventilgehäuse (2; 2.1; 2.2; 2.3) mit einer Bajonettverbindung (2f, 2g/3.1d, 3.1e) oder einer bajonettähnliche Verbindung befestigt ist.

12. Hubventil nach Anspruch 11,
**dadurch gekennzeichnet,**
**dass** der rohrförmige Laternenschaft (3.1 b) an seinem ventilgehäuseseitigen Ende wenigstens zwei, in radialer Richtung gesehen, radial nach innen vorspringende laternenseitige Bajonettkragen (3.1d) aufweist, die jeweils durch zwischen diesen ausgebildete laternenseitige Bajonettausnehmungen (3.1e) beiderseits begrenzt sind, dass das Ventilgehäuse (2; 2.1; 2.2; 2.3) außenseits und im Umfangsbereich der Gehäuseöffnung (2h) eine entsprechende Anzahl, in radialer Richtung gesehen, radial nach außen vorspringende ventilgehäuseseitige Bajonettkragen (2f) aufweist, die jeweils durch zwischen diesen ausgebildete ventilgehäuseseitige Bajonettausnehmungen (2g) beiderseits begrenzt sind, wobei die laternenseitigen Bajonettkragen (3.1 d) in einer Offenstellung der Bajonettverbindung in die ventilgehäuseseitigen Bajonettausnehmungen (2g) eingreifen und in einer Schließstellung der Bajonettverbindung die ventilgehäuseseitigen Bajonettkragen (2f) nahezu deckungsgleich hintergreifen.

13. Hubventil nach Anspruch 12,
**dadurch gekennzeichnet,**
**dass** zwei laternenseitige Bajonettkragen (3.1d) vorgesehen sind, die diametral einander gegenüberliegen.

14. Hubventil nach einem der Ansprüche 1 bis 13,
**dadurch gekennzeichnet,**
**dass** die Betätigungsstange (4a/4b) in einer rohrförmigen Lagerbuchse (6) geführt ist, die innerhalb des Latemengehäuses (3.1) angeordnet und festgelegt ist und die dessen axiale Länge weitestgehend ausnutzt.

15. Hubventil nach Anspruch 14,
**dadurch gekennzeichnet,**
**dass** sich ein ventilgehäuseseitiger Buchsenflansch (6b) der Lagerbuchse (6) auf dem Ventilgehäuse (2; 2.1; 2.2; 2.3), das die Gehäuseöffnung (2h) außenseits umschließt, abstützt und dabei eine zwischen Gehäuseöffnung (2h) und der querschnittserweiterten Betätigungsstange (4a) angeordnete Stangendichtung (10) axial vorspannt.

16. Hubventil nach Anspruch 14 oder 15,
**dadurch gekennzeichnet,**
**dass** in die ventilgehäuseseitige Stirnseite der Lagerbuchse (6) mehrere über den Umfang verteilt angeordnete Nuten eingreifen, die die Lagerbuchse (6) an diesen Stellen durchgängig durchsetzen.

17. Hubventil nach einem der Ansprüceh 11 bis 16,
**dadurch gekennzeichnet,**
**dass** die Bajonettverbindung (2f, 2g/3.1d, 3.1e) oder die bajonettähnliche Verbindung in ihrer Schließstellung selbsttätig formschlüssig verriegelt ist.

18. Hubventil nach einem der Ansprüche 12 bis 17,
**dadurch gekennzeichnet,**
**dass** der rohrförmige Laternenschaft (3.1b) in dem auf den Umfang bezogenen Erstreckungsbereich wenigstens eines laternenseitigen Bajonettkragens (3.1d) einen Schlitz (3.1g) aufweist, der sich vom ventilgehäuseseitigen Ende des Laternenschaftes (3.1 b) ein Stück weit axial in diesen und dabei, in radialer Richtung gesehen, durchgängig von innen nach außen erstreckt.

19. Hubventil nach einem der Ansprüche 12 bis 18,
**dadurch gekennzeichnet,**
**dass** jeder ventilgehäuseseitige Bajonettkragen (2f) radial außenseits eine in ihrer radialen Tiefe und ihrer Umfangserstreckung begrenzte nutförmige Ausnehmung (2k) aufweist, wobei in der Schließstellung der Bajonettverbindung die Ausnehmung (2k), in Umfangsrichtung gesehen, deckungsgleich mit dem zugeordneten Schlitz (3.1g) positioniert ist.

20. Hubventil nach Anspruch 18 oder 19,
**dadurch gekennzeichnet,**
**dass** im Bereich des ventilgehäuseseitigen Endes der Lagerbuchse (6) an dieser wenigstens eine Nase (6d) angeordnet ist, die zum Einen, in radialer Richtung gesehen, über den äußeren Rand der Lagerbuchse (6) auskragt und die zum Anderen, in axialer Richtung gesehen, über die ventilgehäuseseitige Stirnseite der Lagerbuchse (6) hinausreicht, dass die Nase (6d), in radialer Richtung gesehen, federelastisch ausgebildet ist und in den zugeordneten Schlitz (3.1g) eingreift.

21. Hubventil nach Anspruch 20,
**dadurch gekennzeichnet,**
**dass** in der Schließstellung der Bajonettverbindung das Ende der Nase (6d) in die zugeordnete Ausnehmung (2k) eingreift.

22. Hubventil nach einem der Ansprüche 1 bis 21,
**dadurch gekennzeichnet,**
**dass** die jeweiligen Merkmale auf ein Absperrventil (1.1) Anwendung finden und das Ventilgehäuse (2; 2.1) in Form eines als Absperrventilgehäuse fungierenden ersten Ventilgehäuses (2.1) ausgebildet ist.

23. Hubventil nach einem der Ansprüche 1 bis 21,
**dadurch gekennzeichnet,**
**dass** die jeweiligen Merkmale auf ein Tankbodenventil (1.2) Anwendung finden, bei dem der zweite Anschlussstutzen (2c) von unten in einen Tankboden (21) eines Tanks oder Behälters einmündet und das Ventilgehäuse (2; 2.2) in Form eines als Tankbodenventilgehäuse fungierenden zweiten Ventilgehäuses (2.2) ausgebildet ist.

## Claims

1. A lift valve (1; 1.1; 1.2; 1.3), particularly for process technology,
with a valve housing (2; 2.1; 2.2; 2.3) consisting of at least one valve housing component (2a), with at least a first and a second connecting sleeve (2b, 2c), which are connected to the valve housing component (2a) and produce a connection to the interior space thereof, with a connection opening (2d) arranged in the valve housing (2; 2.1; 2.2; 2.3) between the connecting sleeves (2b, 2c), in or on which connection opening a seating area (2e) is formed, with a translationally displaceable monolithic closing element (4; 4.1) which co-operates with the seating area (2e) and controls the connection opening (2d), with one single actuation rod (4a/4b) fastened on the closing element (4; 4.1) and being sealingly guided out of the valve housing (2; 2.1; 2.2; 2.3) through a housing opening (2h) of the same in front of the connection opening (2d) and being connected to a driving piston (5; 5*) of an actuator (3; 3*), with a lantern housing (3.1) connecting the valve housing (2; 2.1; 2.2; 2.3) with the actuator (3; 3*), with the actuator (3; 3*) which has in a drive housing (3a) the driving piston(5; 5*) that is displaceable against the force of a driving spring (7; 7.1; 7.2) and upon pressurization with a pressure medium (D), and with the actuation rod (4a/4b), which is enlarged in its cross section at least in the penetration region with the valve housing (2; 2.1; 2.2; 2.3), such that it accommodates there a part of the driving spring (7; 7.1; 7.2) at the closing element side thereof in a pot-shaped recess (4c)
**characterised in that**
the closing element (4; 4.1) opens towards the actuator (3; 3*), and that the ends of the driving spring (7; 7.1; 7.2) rest against the actuation rod (4a/4b) on the one hand, and against a cover part (3b) on the other hand, respectively, said cover part (3b) delimiting the drive housing (3a) on that side of the driving piston (5; 5*) which faces away from the closing element (4; 4.1).

2. Lift valve according to claim 1,
**characterised in that**
the actuation rod (4a/4b) is realised such that a cross-section enlarged actuation rod (4a) is connected to the closing element (4) via a cross-section reduced actuation rod (4b) that is smaller in its cross section.

3. Lift valve according to claim 2,
**characterised in that**
a counter-pressure area (4g) on the cross-section enlarged actuation rod (4a) in the transition region to the cross-section reduced actuation rod (4b) is associated to the closing element (4), in order to compensate pressure shocks in the interior space of the valve housing (2; 2.1; 2.2; 2.3).

4. Lift valve according to any one of claims 1 to 3,
**characterised in that**
the cross-section enlarged actuation rod (4a) projects into the valve housing (2; 2.1; 2.2; 2.3) at least for the full valve stroke (H).

5. Lift valve according to any one of claims 1 to 4,
**characterised in that**
with respect to its cross section, the pot-shaped recess (4c) continues up to the driving piston (5; 5*) without becoming narrower.

6. Lift valve according to any one of claims 1 to 5,
**characterised in that**
a pot bottom (4f; 4f*) of the pot-shaped recess (4c) forms a spring abutment (4d) of the driving spring (7; 7.1; 7.2) at the closing element side thereof.

7. Lift valve according to any one of claims 1 to 6,
**characterised in that**
for the purpose of dismounting the actuator (3; 3*) from the valve housing (2; 2.1; 2.2; 2.3), the actuation rod (4a/4b) is structured dividably.

8. Lift valve according to claim 7,
**characterised in that**
it is provided to divide the cross-section enlarged actuation rod (4a) into one component of the actuation rod (4a*) at the closing element side and one component of the actuation rod (4a**) at the drive side, and that a sealed positive and non-positive connection of these components (4a*, 4a**) takes place via a nut thread (4a.1*) at the closing element side component (4a*), and via an exterior thread on the drive side component (4a**).

9. Lift valve according to any one of claims 1 to 8,
**characterised in that**
the lantern housing (3.1) has a pipe-shaped lantern shaft (3.1b) with a drive side lantern flange (3.1 a) at the one end, and means (3.1d, 3.1e) for connecting the lantern housing (3.1) with the valve housing (2; 2.1; 2.2; 2.3) on the other end, and at least one lantern opening (3.1c) disposed in the lantern shaft (31.b) and breaking through the same.

10. Lift valve according to any one of claims 1 to 9,
**characterised in that**
at its end facing the closing element (4; 4.1), the driving spring (7; 7.1; 7.2) is supported on a first support plate (18b), which is fixedly connected to the cover part (3b) via a connection rod (18a) that penetrates the driving spring (7; 7.1; 7.2), and that the driving spring (7; 7.1; 7.2) is supported on its other end on a second support plate (19), which is fixedly clamped between the driving piston (5*) and the drive side end of the actuation rod (4a/4b).

11. Lift valve according to any one of claims 1 to 10,
**characterised in that**
the lantern housing (3.1) is attached to the valve housing (2; 2.1; 2.2; 2.3) by a bayonet joint (2f, 2g/3.1d, 3.1e) or a bayonet-like connection.

12. Lift valve according to claim 11,
**characterised in that**
at its valve housing side end, the pipe-shaped lantern shaft (3.1b) has at least two lantern side bayonet collars (3.1d) projecting radially towards the inside when seen in the radial direction, which are each delimited on both sides by lantern side bayonet recesses (3.1e) realised between them, that on the outside and in the circumference region of the housing opening (2h), the valve housing (2; 2.1; 2.2; 2.3) has a corresponding number of valve housing side bayonet collars (2f) projecting radially towards the outside when seen in the radial direction, which are each delimited on both sides by valve housing side bayonet recesses (2g) realised between them, wherein the lantern side bayonet collars (3.1d) engage into the valve housing side bayonet recesses (2g) in an opened position of the bayonet joint, and almost coincidently grip behind the valve housing side bayonet collars (2f) in a closed position of the bayonet joint.

13. Lift valve according to claim 12,
**characterised in that**
two lantern side bayonet collars (3.1d) are provided, which are situated diametrically opposite to each other.

14. Lift valve according to any one of claims 1 to 13,
**characterised in that**
the actuation rod (4a/4b) is guided in a pipe-shaped bearing bush (6), which is arranged and fixed inside the lantern housing (3.1) and which makes use of the axial length thereof as far as possible.

15. Lift valve according to claim14,
**characterised in that**
a valve housing side bush flange (6b) of the bearing bush (6) rests on the valve housing (2; 2.1; 2.2; 2.3) which surrounds the housing opening (2h) at the outer side, and that it axially biases a rod seal (10) disposed between the housing opening (2h) and the cross-section enlarged actuation rod (4a) through this.

16. Lift valve according claim 14 or 15,
**characterised in that**
several grooves distributed over the circumference engage into the front side of the bearing bush (6) at the valve housing side, which piercingly cross the bearing bush (6) on these locations.

17. Lift valve according to any one of claims 11 to 16,
**characterised in that**
the bayonet joint (2f, 2g/3.1d, 3.1e) or the bayonet-like connection is automatically positively fitting locked in its closed position.

18. Lift valve according to any one of claims 12 to 17,
**characterised in that**
in the extension region of at least one lantern side bayonet collar (3.1d) with respect to the circumference, the pipe-shaped lantern shaft (3.1b) has a slit (3.1g), which extends somewhat into the bayonet collar (3.1d) from the valve housing side of the lantern shaft (3.1b), and by doing so piercingly from the inside towards the outside when seen in the radial direction.

19. Lift valve according to any one of claims 12 to 18,
**characterised in that**
radially at the outer side, each valve housing side bayonet collar (2f) has a groove-shaped recess (2k), delimited in its radial depth and its circumferential extension, wherein in the closed position of the bayonet joint, the recess (2k) is positioned coincidently with the associated slit (3.1 g) when seen in the circumferential direction.

20. Lift valve according to claim 18 or 19,
**characterised in that**
in the region of the valve housing side end of the bearing bush (6), at least one nose (6d) is disposed on the same which, when seen in the radial direction, is salient over the outer border of the bearing bush (6) at the one hand, and which on the other hand, when seen in the axial direction, extends beyond the front side of the bearing bush (6) at the valve housing side thereof, and that the nose (6d) when seen in the radial direction is realised spring-resiliently and engages into the associated slit (3.1 g).

21. Lift valve according to claim 20,
**characterised in that**
in the locking position of the bayonet joint, the end of the nose (6d) engages into the associated recess (2k).

22. Lift valve according to any one of claims 1 to 21,
**characterised in that**
the respective features are applied to a shut-off valve (1.1), and the valve housing (2; 2.1) is realised in the form of a first valve housing (2.1) acting as a shut-off valve housing.

23. Lift valve according to any one of claims 1 to 21,
**characterised in that**
the respective features are applied to a tank bottom valve (1.2), wherein the second connecting sleeve (2c) runs out from the downside into a tank bottom (21) of a tank or container, and the valve housing (2; 2.2) is realised in the form of a second valve housing (2.2) acting as a tank bottom valve housing.

## Revendications

1. Soupape de levage (1 ; 1.1 ; 1.2 ; 1.3), notamment pour la technologie de procédés, avec un boîtier de soupape (2 ; 2.1 ; 2.2 ; 2.3) composé d'au moins une partie de boîtier de soupape (2a), avec au moins une première et une deuxième tubulure de raccordement (2b, 2c) qui sont raccordées à la partie de boîtier de soupape (2a) et réalisent une liaison avec l'espace intérieur de celui-ci, avec une ouverture de raccordement (2d) qui est disposée dans le boîtier de soupape (2 ; 2.1 ; 2.2 ; 2.3) entre les tubulures de raccordement (2b, 2c) et à l'intérieur de laquelle ou au niveau de laquelle est constituée une face de siège (2e), avec une pièce de fermeture (4 ; 4.1) uniforme coulissant en translation qui coopère avec la face de siège (2e) et commande l'ouverture de raccordement (2d), avec une tige d'actionnement (4a/4b) unique qui est fixée sur la pièce de fermeture (4 ; 4.1) et qui, à travers une ouverture de boîtier (2h) du boîtier de soupape (2 ; 2.1 ; 2.2 ; 2.3) opposée à l'ouverture de raccordement (2d), est guidée de façon étanche hors de ce boîtier et est raccordée à un piston d'entraînement (5 ; 5*) d'un servomoteur (3 ; 3*), avec un boîtier de lanterne (3.1) raccordant le boîtier de soupape (2 ; 2.1 ; 2.2 ; 2.3) au servomoteur (3 ; 3*), avec le servomoteur (3 ; 3*) qui, dans un boîtier d'entraînement (3a), présente le piston d'entraînement (5 ; 5*) qui coulisse contre la force d'un ressort d'entraînement (7 ; 7.1 ; 7.2) s'il est soumis à l'action d'un moyen de pression (D), avec la tige d'actionnement (4a/4b) dont, au moins dans sa zone de pénétration avec le boîtier de soupape (2 ; 2.1 ; 2.2 ; 2.3), la section transversale est élargie de sorte que la tige d'actionnement y reçoit dans un creux (4c) en forme de pot une partie, côté pièce de fermeture, du ressort d'entraînement (7 ; 7.1 ; 7.2),
**caractérisée en ce que**
la pièce de fermeture (4 ; 4.1) est ouverte vers le servomoteur (3 ; 3*), et **en ce que** le ressort d'entraînement (7 ; 7.1 ; 7.2) s'appuie respectivement côté extrémité directement ou indirectement d'une part sur la tige d'actionnement (4a/4b) et d'autre part sur une pièce de couvercle (3b) qui limite le boîtier d'entraînement (3a) sur le côté du piston d'entraînement (5 ; 5*) qui est éloigné de la pièce de fermeture (4 ; 4.1).

2. Soupape de levage selon la revendication 1,
**caractérisée en ce que**
la tige d'actionnement (4a/4b) est constituée de sorte qu'une tige d'actionnement (4a) à section transversale élargie est raccordée à la pièce de fermeture (4) par le biais d'une tige d'actionnement (4b) à section transversale réduite qui est plus petite quant à sa section transversale.

3. Soupape de levage selon la revendication 2,
**caractérisée en ce que**
à la pièce de fermeture (4), pour la compensation de coups de bélier dans l'espace intérieur du boîtier de soupape (2 ; 2.1 ; 2.2 ; 2.3), il est affecté une face de contre-pression (4g) sur la tige d'actionnement (4a) à section transversale élargie dans la zone de transition avec la tige d'actionnement (4b) à section transversale réduite.

4. Soupape de levage selon une des revendications 1 à 3,
**caractérisée en ce que**
la tige d'actionnement (4a) à section transversale élargie fait saillie dans le boîtier de soupape (2 ; 2.1 ; 2.2 ; 2.3) au moins sur toute la levée de soupape (H).

5. Soupape de levage selon une des revendications 1 à 4,
**caractérisée en ce que**
le creux (4c) en forme de pot, vu en coupe transversale, se poursuit sans rétrécissement jusqu'au piston d'entraînement (5 ; 5*).

6. Soupape de levage selon une des revendications 1 à 5,
**caractérisée en ce**
**qu'**un fond de pot (4f ; 4f*) du creux (4c) en forme de pot forme une butée de ressort (4d), côté pièce de fermeture, du ressort d'entraînement (7 ; 7.1 ; 7.2).

7. Soupape de levage selon une des revendications 1 à 6,
**caractérisée en ce que**
à des fins de démontage du servomoteur (3 ; 3*) à partir du boîtier de soupape (2 ; 2.1 ; 2.2 ; 2.3), la tige d'actionnement (4a/4b) est assemblée de façon divisible.

8. Soupape de levage selon la revendication 7,
**caractérisée en ce**
**qu'**il est prévu la division de la tige d'actionnement (4a) à section transversale élargie en une partie, côté pièce de fermeture, de la tige d'actionnement (4a*) et en une partie, côté entraînement, de la tige d'actionnement (4a**), et en ce qu'une liaison de forme et de force, rendue étanche, de ces pièces (4a*, 4a**) s'effectue par le biais d'un filet femelle (4a.1*) sur la partie côté pièce de fermeture (4a*) et par le biais d'un filet mâle (4a.1**) sur la partie côté entraînement (4a**).

9. Soupape de levage selon une des revendications 1 à 8,
**caractérisée en ce que**
le boîtier de lanterne (3.1) présente un fût de lanterne (3.1b) tubulaire avec une bride de lanterne (3.1a) côté entraînement à une extrémité et des moyens (31d. 3.1e) pour le raccordement du boîtier de lanterne (3.1) au boîtier de soupape (2 ; 2.1 ; 2.2 ; 2.3) à l'autre extrémité, ainsi qu'au moins une ouverture de lanterne (3.1c) disposée dans le fût de lanterne (3.1b) et traversant ce fût.

10. Soupape de levage selon une des revendications 1 à 9,
**caractérisée en ce que**
le ressort d'entraînement (7 ; 7.1 ; 7.2) s'appuie, par son extrémité tournée vers la pièce de fermeture (4 ; 4.1), sur une première plaque d'appui (18b) qui est raccordée fixement à la pièce de couvercle (3b) par le biais d'une tige de raccordement (18a) traversant le ressort d'entraînement (7 ; 7.1 ; 7.2), et **en ce que** le ressort d'entraînement (7 ; 7.1 ; 7.2) s'appuie, par son autre extrémité, sur une deuxième plaque d'appui (19) qui est serrée fixement entre le piston d'entraînement (5*) et l'extrémité côté entraînement de la tige d'actionnement (4a/4b).

11. Soupape de levage selon une des revendications 1 à 10,
**caractérisée en ce que**
le boîtier de lanterne (3.1) est fixé sur le boîtier de soupape (2 ; 2.1 ; 2.2 ; 2.3) avec un raccord à baïonnette (2f, 2g/3.1d, 3.1e) ou un raccord de type baïonnette.

12. Soupape de levage selon la revendication 11,
**caractérisée en ce que**
le fût de lanterne (3.1b) tubulaire présente à son extrémité côté boîtier de soupape au moins deux cols à baïonnette (3.1d) côté lanterne faisant saillie radialement vers l'intérieur, vu dans la direction radiale, qui sont délimités des deux côtés respectivement par des creux à baïonnette (3.1 e) côté lanterne constitués entre les cols, **en ce que** le boîtier de soupape (2 ; 2.1 ; 2.2 ; 2.3), extérieurement et dans la zone circonférentielle de l'ouverture de boîtier (2h), présente un nombre correspondant, vu dans la direction radiale, de cols à baïonnette (2f) côté boîtier de soupape faisant saillie vers l'extérieur radialement, cols à baïonnette (2f) qui sont délimités des deux côtés respectivement par des creux à baïonnette (2g) côté boîtier de soupape constitués entre ces cols à baïonnette, les cols à baïonnette (3.1d) côté lanterne engrenant, dans une position d'ouverture du raccord à baïonnette, dans les creux à baïonnette (2g) côté boîtier de soupape et venant, dans une position de fermeture du raccord à baïonnette, agripper par l'arrière les cols à baïonnette (2f) côté boîtier de soupape d'une façon quasiment congruente.

13. Soupape de levage selon la revendication 12,
**caractérisée en ce que**
deux cols à baïonnette (3.1d) côté lanterne sont prévus qui sont diamétralement opposés.

14. Soupape de levage selon une des revendications 1 à 13,
**caractérisée en ce que**
la tige d'actionnement (4a/4b) est guidée dans un coussinet (6) tubulaire qui est disposé et fixé à l'intérieur du boîtier de lanterne (3.1) et qui exploite très largement sa longueur axiale.

15. Soupape de levage selon la revendication 14,
**caractérisée en ce**
**qu'**une bride de coussinet (6b) du coussinet (6) côté boîtier de soupape s'appuie sur le boîtier de soupape (2 ; 2.1 ; 2.2 ; 2.3) qui entoure extérieurement l'ouverture de boîtier (2h) et précontraint axialement en l'occurrence un joint d'étanchéité de tige (10) disposé entre l'ouverture de boîtier (2h) et la tige d'actionnement (4a) à section transversale élargie.

16. Soupape de levage selon la revendication 14 ou 15,
**caractérisée en ce que**
plusieurs rainures disposées de façon répartie sur la circonférence engrènent dans le côté frontal du coussinet (6) côté boîtier de soupape et traversent complètement le coussinet (6) à ces endroits.

17. Soupape de levage selon une des revendications 11 à 16,
**caractérisée en ce que**
le raccord à baïonnette (2f, 2g/3.1d, 3.1e) ou le raccord de type baïonnette est verrouillé automatiquement dans sa position de fermeture par liaison de forme.

18. Soupape de levage selon une des revendications 12 à 17,
**caractérisée en ce que**
le fût de lanterne (3.1b) tubulaire présente, dans la zone d'étendue rapportée à la circonférence d'au moins un col à baïonnette (3.1d) côté lanterne, une fente (3.1g) qui s'étend sur une petite distance axiale dans le fût de lanterne à partir de l'extrémité, côté boîtier de soupape, du fût de lanterne (3.1b) et en l'occurrence complètement de l'intérieur à l'extérieur vu dans la direction radiale.

19. Soupape de levage selon une des revendications 12 à 18,
**caractérisée en ce que**
chaque col à baïonnette (2f) côté boîtier de soupape présente, extérieurement radialement, un creux (2k) en forme de rainure qui est limité dans sa profondeur radiale et dans son étendue circonférentielle, le creux (2k) étant, dans la position de fermeture du raccord à baïonnette et vu dans la direction circonférentielle, positionné en coïncidence avec la fente (3.1 g) affectée.

20. Soupape de levage selon la revendication 18 ou 19,
**caractérisée en ce que**,
dans la zone de l'extrémité côté boîtier de soupape du coussinet (6), au moins un bec (6d) est disposé sur ce coussinet et, d'une part, vu dans la direction radiale, déborde du bord extérieur du coussinet (6) et, d'autre part, vu dans la direction axiale, dépasse le côté frontal, côté boîtier de soupape, du coussinet (6), **en ce que** le bec (6d), vu dans la direction radiale, est constitué de manière élastique à la façon d'un ressort et engrène dans la fente (3.1 g) affectée.

21. Soupape de levage selon la revendication 20,
**caractérisée en ce que**,
dans la position de fermeture du raccord à baïonnette, l'extrémité du bec (6d) engrène dans le creux (2k) affecté.

22. Soupape de levage selon une des revendications 1 à 21,
**caractérisée en ce que**
les caractéristiques respectives trouvent leur application dans une soupape d'arrêt (1.1) et **en ce que** le boîtier de soupape (2 ; 2.1) est constitué sous la forme d'un premier boîtier de soupape (2.1) fonctionnant en tant que boîtier de soupape d'arrêt.

23. Soupape de levage selon une des revendications 1 à 21,
**caractérisée en ce que**
les caractéristiques respectives trouvent leur application dans une soupape de fond de cuve (1.2) dans laquelle la deuxième tubulure de raccordement (2c) débouche par en-dessous dans un fond de cuve (21) d'une cuve ou d'un réservoir, et **en ce que** le boîtier de soupape (2 ; 2.2) est constitué sous la forme d'un deuxième boîtier de soupape (2.2) fonctionnant en tant que boîtier de soupape de fond de cuve.
